# EUROPEAN PATENT APPLICATION

(11) **EP 2 410 751 A1**
(43) Date of publication of application: **25.01.2012**
(21) Application number: 11185698.5
(22) Date of filing: 10.10.2006
(51) Int. Cl.: H04N 7/26

(54) **Method of scalable video coding and the codec using the same**

(30) Priority: 11.10.2005 KR 20050095222; 09.10.2006 KR 20060098098
(62) Divisional of application: 06799153.9
(71) Applicant: Electronics and Telecommunications Research Institute, Daejeon-city 305-350 (KR); Industry Academic Cooperation of Kyunghee University, Yongin-si, Gyeonggi-do 446-701 (KR)
(72) Inventor: Park, Gwang-Hoon, 463-831 Gyeonggi-do (KR); Park, Min-Woo, 441-881 Gyeonggi-do (KR); Jeong, Se-Yoon, 306-769 Daejeon-city (KR); Kim, Kyu-Heon, 302-772 Daejeon-city (KR); Hong, Jin-Woo, 305-755 Daejeon-city (KR)
(74) Representative: Betten & Resch

(57) **Abstract**

Since joint scalable video coding (JSVC) adopts a scheme in which numbers are assigned to all of the pictures according to the order in which the pictures are displayed, it is difficult to detect a drop (or loss) of a key picture and thus it is difficult to effectively take action against an error caused by the loss of the key picture. The present invention provides a coding method of detecting a loss of a key picture by numbering key pictures in JSVC in which predictive (P) pictures have a closed-loop structure and of effectively taking action against an error in the case of a loss of a key picture, and a codec using the coding method. The SVC method includes performing encoding while assigning a number to a key picture of an upper layer and performing decoding with respect to the number- encoded current key picture of the upper layer using data of a decoded image of a picture of a lower layer that is temporally matched with the current key picture of the upper layer when a loss of a key picture between the number-encoded current key picture of the upper layer and a previous key picture that is number-encoded prior to the current key picture is detected. Therefore, it is possible to effectively take action against to an error caused by a loss of a key picture by detecting the loss of a key picture during decoding by encoding using numbering of key pictures in JSVC in which closed-loop coding is performed by consecutively predicting key pictures. Moreover, it is possible to minimize degradation in image quality by concealing an error caused by an incorrect reference by using data of a decoded image of a corresponding picture of a lower base layer when a key picture of an upper layer is lost in an environment where transmission of the lower base layer is guaranteed with a video stream having a multi-layered structure.

## Description

### TECHNICAL FIELD

The present invention relates to a scalable video coding (SVC) method, and more particularly, to an SVC method, in which error concealment can be implemented by assigning a number to a key picture and detecting a loss of the key picture, and a codec using the SVC method.

### BACKGROUND ART

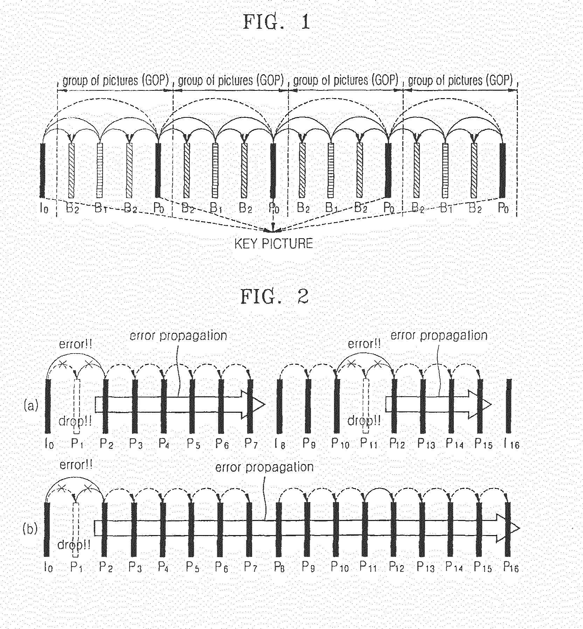

FIG. 1 illustrates groups of pictures (GOPs) and key pictures in Joint Scalable Video Coding (JSVC) and FIG 2 illustrates error propagation when a predictive (P) picture is lost, FIG. 2(a) shows a case where there is an intra (1) picture during error propagation and FIG. 2(b) shows a case where there is no I picture during error propagation.

Referring to FIG. 1, a picture at the end of a GOP is referred to as a key picture in JSVC. An interval between key pictures, i.e., the size of a GOP, may be fixed or variable. When temporal scalability is used, the interval between key pictures is variable.

In JSVC, key pictures are coded as I or P pictures. When key pictures are coded as P pictures, close-loop coding is performed on the key pictures. In closed-loop coding, consecutive P pictures are coded by using prediction with reference to a previous P picture as illustrated in FIG. 2. When P pictures are coded by closed-loop coding, a P picture may be lost due to an error in a transmission line.

FIG. 2(a) illustrates error propagation when a P₁ picture and a P₁₁ picture are lost during transmission. A P₂ picture which is supposed to be predictive-decoded with reference to the lost P₁ picture is predictive-decoded with reference to an l₀ picture decoded prior to the P₁ picture. As a result, the P₂ picture includes an error and the error continuously propagates to P pictures following the P₂ picture until an l₈ picture is transmitted. A P₁₂ picture which is supposed to be predictive-decoded with reference to a lost P₁₁ picture is predictive-decoded with reference to a P₁₀ picture decoded prior to the P₁₁ picture. As a result, the P₁₂ picture includes an error and the error continuously propagates to P pictures following the P₁₂ picture until an l₁₆ picture is transmitted.

FIG, 2(b) illustrates error propagation when key pictures are coded as only P pictures, unlike the case illustrated in FIG. 2(a), and a P₁ picture is lost. A P₂ picture which is to be predictive-decoded with reference to the lost P₁ picture is predictive-decoded with reference to an l₀ picture decoded prior to the P₁ picture. As a result, the P₂ picture includes an error and the error continuously propagates to P pictures following the P₂ picture.

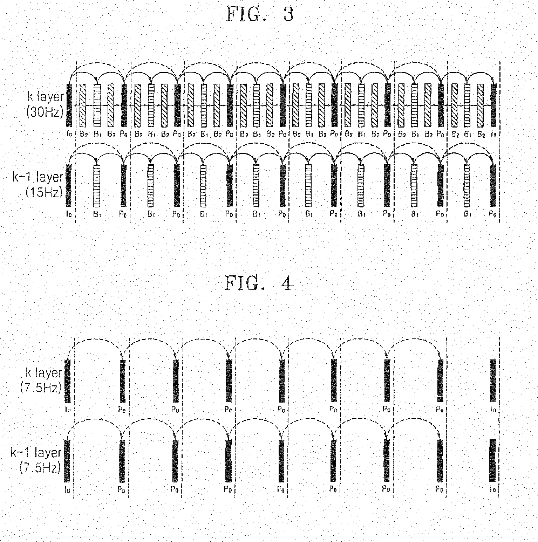

FIG. 3 illustrates an example of coding in typical JSVC with two layers. A lower layer (k-1 layer) is an image having a frame rate of 15Hz and a GOP size of 2. An upper layer (k layer) is an image having a frame rate of 30Hz and a GOP size of 4.

Referring to FIG. 3, B₁ pictures can be dropped in order to support a frame rate of 7.5Hz in the lower layer, and B₂ pictures are dropped in order to support a frame rate of 15Hz and B₁ pictures and B₂ pictures are dropped in order to support a frame rate of 7.5Hz in the upper layer.

FIG. 4 illustrates a structure in which a frame rate of 7.5Hz is supported in both of the layers illustrated in FIG. 3. Referring to FIG. 4, the B₁ pictures are dropped in the lower layer and the B₂ pictures and the B₁ pictures are dropped in the upper layer, thereby supporting a frame rate of 7.5Hz in both of the layers. In this case, only key pictures remain in both of the layers and are coded by closed-loop coding.

FIG. 5 illustrates error propagation when a single P picture is dropped in the upper layer of FIG. 4 during transmission.

Like in the example illustrated in FIG. 2, when a next P picture is decoded, a P picture immediately prior to a dropped P picture is referred to and thus an error is generated. The generated error propagates until an I picture is transmitted. If the last picture of a GOP is a P picture, the error will continuously propagate.

Thus, the generation of the error should be recognized and effective action should be taken. When a lower layer is a base layer, coding is performed according to the conventional international coding standard H.264 in JSVC and thus special action cannot be taken. However, in current JSVC, a decoded picture is stored in a picture buffer using a list data structure. Thus, when a single P picture is decoded, pictures are arranged based on picture-of-counter (POC) information of the P picture to be decoded in the list data structure and the P picture is decoded by referring to a specific decoded picture using location information in the list data structure. In this scheme, when a single picture is dropped, another picture included in a picture list is referred to in order to decode a P picture following the dropped picture. As a result, decoding can be performed, but prediction with an incorrect reference causes an error that continuously propagates.

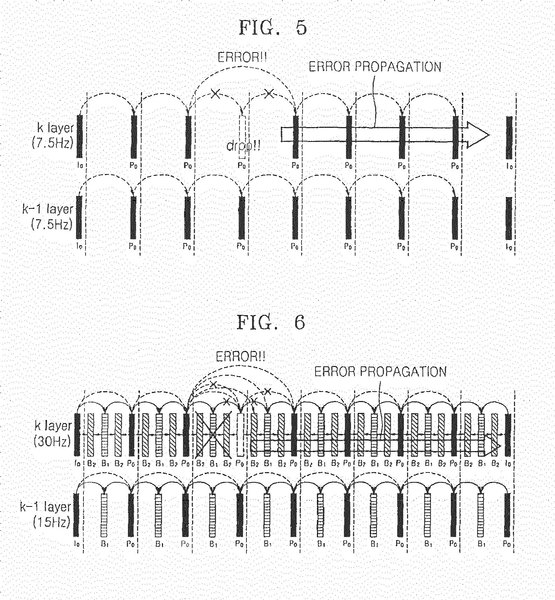

FIG. 6 illustrates the generation of an error in a P picture and propagation of the generated error when a single P picture is dropped in an upper layer including a B picture of FIG. 3.

In this case, B pictures in a GOP including the dropped P picture have a temporally preceding list₀ and a temporally following list, in a decoded picture buffer. Since the P picture that is supposed to be included in list₁ is dropped, there is a vacancy in list, and thus an error is generated when decoding is performed. If the error is neglected and decoding is performed on a next GOP, a P picture in the next GOP will have an incorrect reference as occurred in the case illustrated in FIG. 5 and B pictures in the next GOP will be affected by the P picture having an incorrect reference and causing an error. As a result, the error propagates to following consecutive GOPs. Therefore, the generation of an error should be recognized and effective action should be taken.

However, since JSVC adopts a scheme in which numbers are assigned to all of the pictures according to the order in which the pictures are displayed, it is difficult to detect a drop (or loss) of a key picture and thus it is difficult to effectively take action against an error caused by the loss of a key picture.

### DETAILED DESCRIPTION OF THE INVENTION TECHNICAL PROBLEM

As mentioned above, when an input predictive (P) picture is decoded, a P picture immediately prior to the P picture that is to be decoded should be referred to. However, if the P picture that is to be referred to is dropped, a P picture immediately prior to the dropped P picture will be referred to, thus causing an error, The error propagates until an intra (l) picture is transmitted. If the last picture of a group of pictures (GOP) is a P picture, the error continuously propagates.

Therefore, the generation of an error should be recognized and effective action should be taken. However, since Joint Scalable Video Coding (JSVC) adopts a scheme in which numbers are assigned to all the pictures according to the order in which the pictures are displayed, it is difficult to detect a drop (or loss) of a key picture and thus it is difficult to effectively take action against an error caused by the loss of a key picture.

### TECHNICAL SOLUTION

The present invention provides a coding method of detecting a loss of a key picture by numbering key pictures in Joint Scalable Video Coding (JSVC) in which predictive (P) pictures have a closed-loop structure and of effectively taking action against an error in the case of a loss of a key picture, and a codec using the coding method.

The attached drawings for illustrating embodiments of the present invention are referred to in order to gain a sufficient understanding of the present invention, the merits thereof, and the objectives accomplished by the implementation of the present invention. While the present invention is particularly shown and described with reference to embodiments thereof, it will be understood by those of ordinary skill in the art that various changes in form and details may be made therein without departing from the spirit and scope of the invention as defined by the appended claims.

### ADVANTAGEOUS EFFECTS

The present invention makes it possible to effectively take action against an error caused by a loss of a key picture by detecting the loss of a key picture during decoding by encoding using numbering of key pictures in Joint Scalable Video Coding (JSVC) in which closed-loop coding is performed by consecutively predicting key pictures that distinguish each of group of pictures (GOP)

The present invention can minimize degradation in image quality by concealing an error caused by an incorrect reference to data of a decoded image of a corresponding picture of a lower base layer when a key picture of an upper layer is lost in an environment where transmission of the lower base layer is guaranteed with a video stream having a multi-layered structure.

The present invention also can reduce the amount of bits by deciding whether to use additional bits used to assign numbers to key pictures for error detection and error concealment when an error is not likely to be generated due to the nature of a system.

A coding method using numbering of key pictures according to the present invention can be applied to a case where a key picture is dropped to support a frame rate lower than 7.5Hz when an adaptive GOP structure (AGS) is used, thereby allowing effective error detection and error concealment.

### BEST MODE

According to an aspect of the present invention, there is provided a scalable video encoding method for performing closed-loop encoding by consecutive prediction between key pictures which distinguish each of groups of pictures (GOPs). The scalable video encoding method includes checking if an input picture is a key picture and sequentially assigning a number to the key picture when the input picture is the key picture.

According to another aspect of the present invention, there is provided a scalable video decoding method for performing closed-loop decoding by consecutive prediction between key pictures which distinguish each of GOPs. The scalable video decoding method includes determining whether an current input picture is a key picture, reading a key picture number from the current input picture when the current input picture is the key picture, and detecting a loss of a key picture between the current key picture and a previous key picture that is input prior to the current key picture based on a difference between the key picture number of the current key picture and a key picture number of the previous key picture.

According to another aspect of the present invention, there is provided a scalable video decoding method for performing closed-loop decoding by consecutive prediction between key pictures which distinguish each of GOPs. The scalable video decoding method includes determining a mode of each macroblock of the current key picture of an upper layer when a loss of a key picture between the current key picture of the upper layer and a previous key picture that is input prior to the current key picture is detected, searching in a decoded image of a picture of a lower layer that is temporally matched with the current key picture of the upper layer for an area corresponding to the macroblock of the current key picture of the upper layer when the macroblock is in the inter mode, and copying data of the searched area to the macroblock of the current key picture in order to reconstruct data.

According to another aspect of the present invention, there is provided a scalable video coding method for performing closed-loop coding by consecutive prediction between key pictures which distinguish each of GOPs. The scalable video coding method includes performing encoding while assigning a number to a key picture and detecting a loss of a key picture between the current key picture and a previous key picture that is input prior to the current key picture based on a difference between the key picture number of the current key picture and a key picture number of the previous key picture.

According to another aspect of the present invention, there is provided a scalable video coding method for performing closed-loop coding by consecutive prediction between key pictures which distinguish each of GOPs. The scalable video coding method includes performing encoding while assigning a number to a key picture of an upper layer and performing decoding with respect to the number-encoded current key picture of the upper layer using data of a decoded image of a picture of a lower layer that is temporally matched with the current key picture of the upper layer when a loss of a key picture between the number-encoded current key picture of the upper layer and a previous key picture that is number-encoded prior to the current key picture is detected.

According to another aspect of the present invention, there is provided a scalable video encoder for performing closed-loop encoding by consecutive prediction between key pictures which distinguish each of GOPs. The scalable video encoder includes a key picture checking unit checking if an input picture is a key picture and a key picture numbering unit sequentially assigning a number to the key picture when the input picture is the key picture.

According to another aspect of the present invention, there is provided a scalable video decoder for performing closed-loop decoding by consecutive prediction between key pictures which distinguish each of GOPs. The scalable video decoder includes a key picture determining unit determining whether an input picture is a key picture, a key picture number retrieving unit reading a key picture number from the current key picture when the input picture is the key picture, and an error detecting unit detecting a loss of a key picture between the current key picture and a previous key picture that is input prior to the current key picture based on a difference between the key picture number of the current key picture and a key picture number of the previous key picture.

According to another aspect of the present invention, there is provided a scalable video decoder for performing closed-loop decoding by consecutive prediction between key pictures which distinguish each of GOPs. The scalable video decoder includes a mode determining unit determining a mode of each macroblock of the current key picture of an upper layer when a loss of a key picture between the current key picture of the upper layer and a previous key picture that is input prior to the current key picture is detected, an area searching unit searching in a decoded image of a picture of a lower layer that is temporally matched with the current key picture of the upper layer for an area corresponding to the macroblock of the current key picture of the upper layer when the macroblock is in the inter mode, and a data reconstructing unit copying data of the searched area to the macroblock of the current key picture in order to reconstruct data.

According to another aspect of the present invention, there is provided a scalable video codec for performing closed-loop coding by consecutive prediction between key pictures which distinguish each of GOPs. The scalable video codec includes an encoder performing encoding while assigning a number to a key picture and a decoder detecting a loss of a key picture between the current key picture and a previous key picture that is input prior to the current key picture based on a difference between the key picture number of the current key picture and a key picture number of the previous key picture,

According to another aspect of the present invention, there is provided a scalable video codec for performing closed-loop coding by consecutive prediction between key pictures which distinguish each of GOPs. The scalable video codec includes an encoder performing encoding while assigning a number to a key picture of an upper layer and a decoder performing decoding with respect to the number-encoded current key picture of the upper layer using data of a decoded image of a picture of a lower layer that is temporally matched with the current key picture of the upper layer when a loss of a key picture between the number-encoded current key picture of the upper layer and a previous key picture that is number-encoded prior to the current key picture is detected.

According to another aspect of the present invention, there is provided a computer-readable recording medium having recorded thereon a program for implementing a scalable video coding method for performing closed-loop coding by consecutive prediction between key pictures which distinguish each of GOPs.

### DESCRIPTION OF THE DRAWINGS

FIG. 1 illustrates groups of pictures (GOPs) and key pictures in Joint Scalable Video Coding (JSVC);
FIG. 2 illustrates error propagation when a predictive (P) picture is lost;
FIG. 3 illustrates an example of coding in typical JSVC with two layers;
FIG. 4 illustrates a structure in which a frame rate of 7.5Hz is supported in both of the layers illustrated in FIG. 3;
FIG. 5 illustrates error propagation when a single P picture is lost during transmission in the upper layer illustrated in FIG. 4;
FIG. 6 illustrates error propagation when a single P picture is lost during transmission in the upper layer illustrated in FIG. 3;

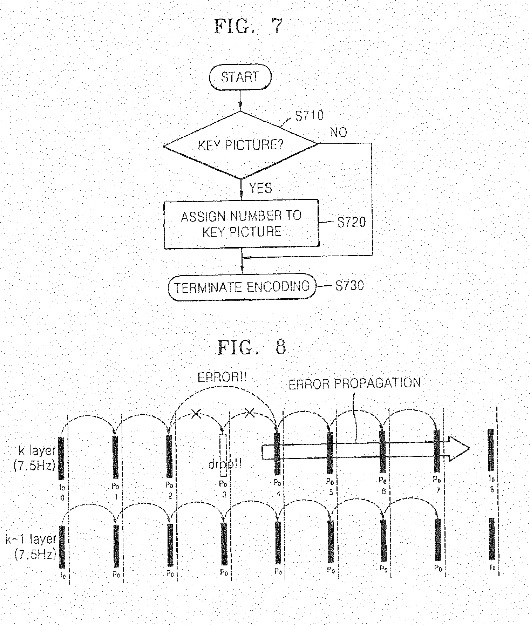

FIG. 7 is a flowchart illustrating an encoding method including numbering of key pictures according to an embodiment of the present invention;
FIG. 8 is conceptual view showing the detection of a loss of a P picture using numbering of key pictures according to an embodiment of the present invention;

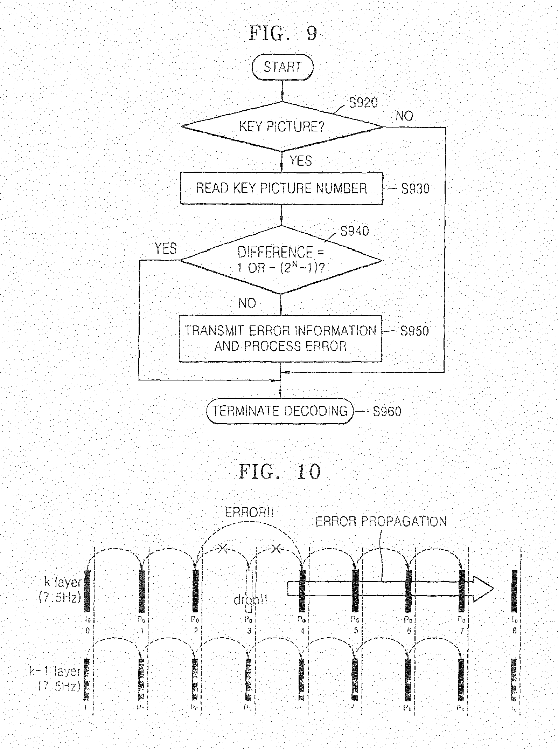

FIG. 9 is a flowchart illustrating a decoding method according to an embodiment of the present invention when key pictures are numbered;
FIG, 10 illustrates an example of error propagation when a single P picture is lost during transmission in the upper layer illustrated in FIG. 5 in which key pictures are numbered;

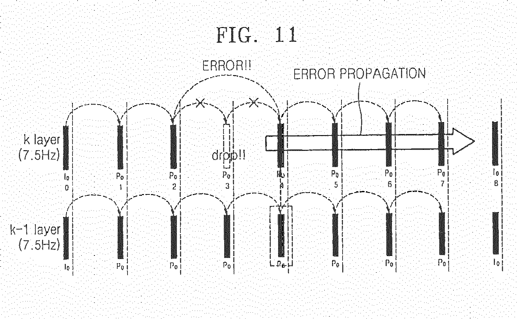

FIG. 11 is a conceptual view showing a method of preventing error propagation using information of a lower layer when a loss of a P picture is detected using numbering of key pictures as illustrated in FIG. 10;

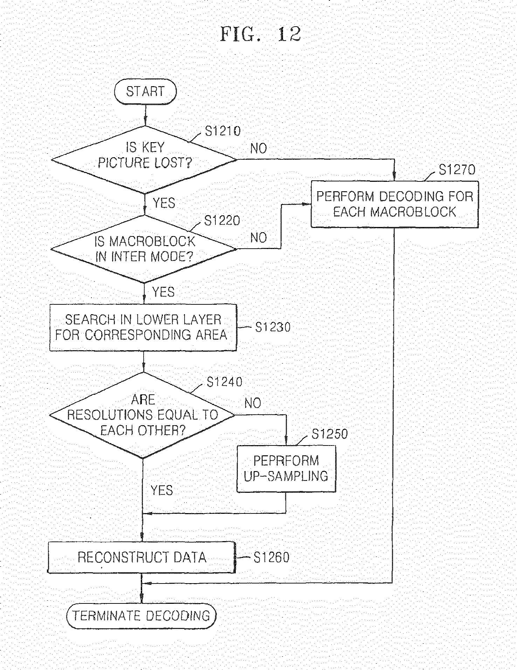

FIG. 12 is a flowchart illustrating a method in which information on a lower layer is used when a loss of a previous P picture in an upper layer is detected according to an embodiment of the present invention;

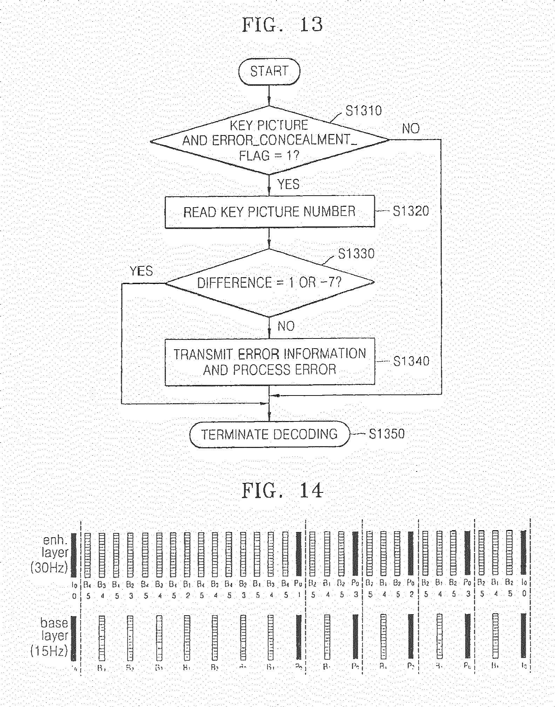

FIG. 13 is a flowchart illustrating a decoding method according to an embodiment of the present invention when numbering of key pictures is performed only when 'error_concealment_flag' is 1;
FIG. 14 illustrates an example of adaptive GOP structure (AGS) coding, in which a base layer having a frame rate of 15Hz is AGS coded in units of GOPs having a size of 16 and [8, 2, 2, 2, 2] is selected as a sub-GOP mode, and coding is performed in [16, 4, 4, 4] mode according to the sub-GOP mode of the base layer and 'temporal_level' for providing temporal scalability is coded in an upper enhancement layer;

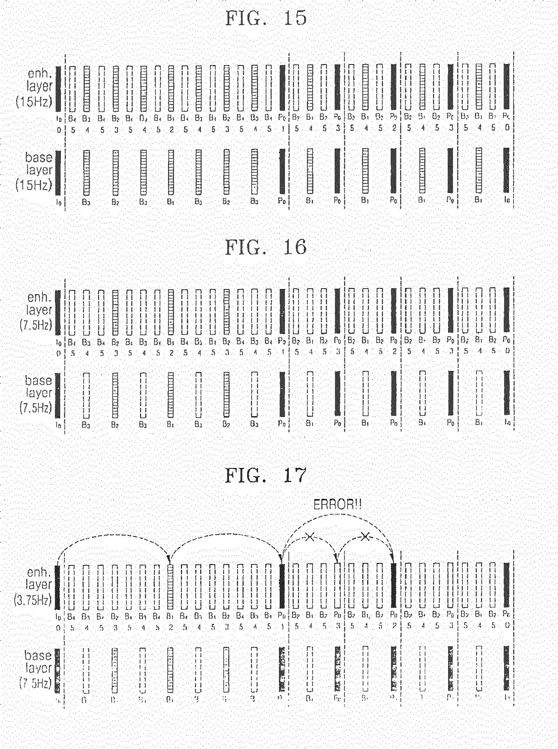

FIG. 15 illustrates an example of an image that has a frame rate of 15Hz by dropping pictures having a 'temporal_level' of 5 in the upper layer illustrated in FIG. 14;
FIG. 16 illustrates an example of an image that has a frame rate of 7.5Hz by dropping pictures having a 'temporal_level' of 4 in the upper layer illustrated in FIG. 14,;
FIG. 17 illustrates an example of an image in which key pictures having a 'temporal_level' higher than 3 in the upper layer of FIG. 14 are dropped together in order to provide a frame rate of 3.75Hz;

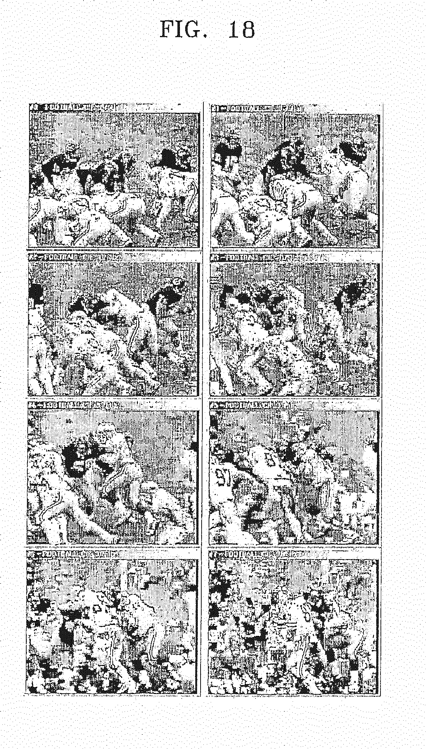

FIG. 18 illustrates decoding results broken (pictures #0 through #7) due to an incorrect reference in an actual image, football CIF 3.75Hz;

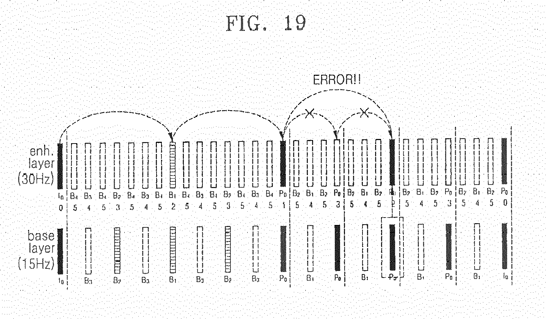

FIG. 19 is a view in which an error is handled using information on a lower base layer when a loss of a key picture in an upper layer is recognized using numbering of key pictures illustrated in FIG. 17;

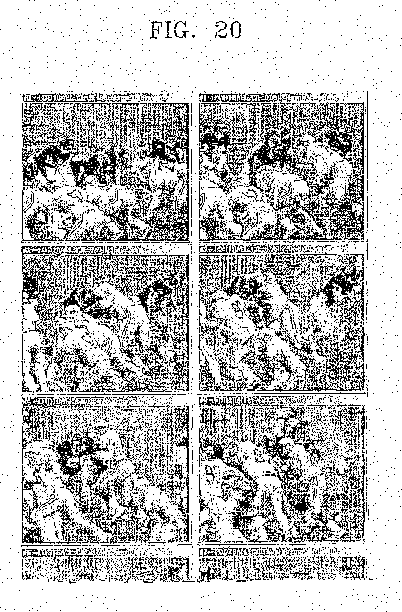

FIG. 20 illustrates results of decoding with respect to the image, football CIF 3.75Hz, by using error concealment;

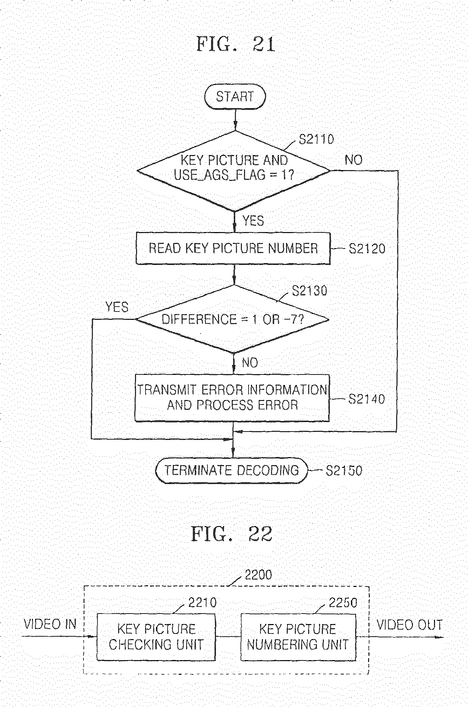

FIG. 21 is a flowchart illustrating a decoding method according to an embodiment of the present invention when 'use_ags_flag' and 'key_picture_num' are coded using 3 bits;
FIG. 22 is a schematic block diagram of an encoder that implements an encoding method including numbering of key pictures according to an embodiment of the present invention;

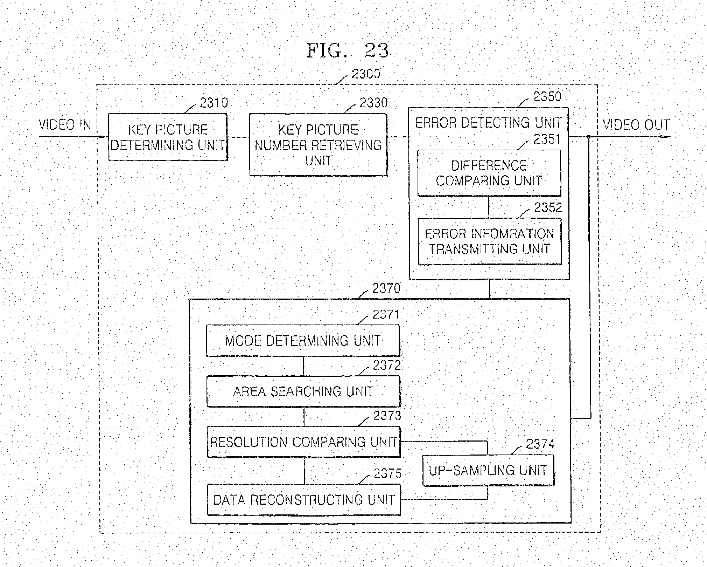

FIG. 23 is a schematic block diagram of a decoder that implements a decoding method in which a loss of a key picture is detected from a key picture number of the key picture and an error is concealed according to an embodiment of the present invention, and

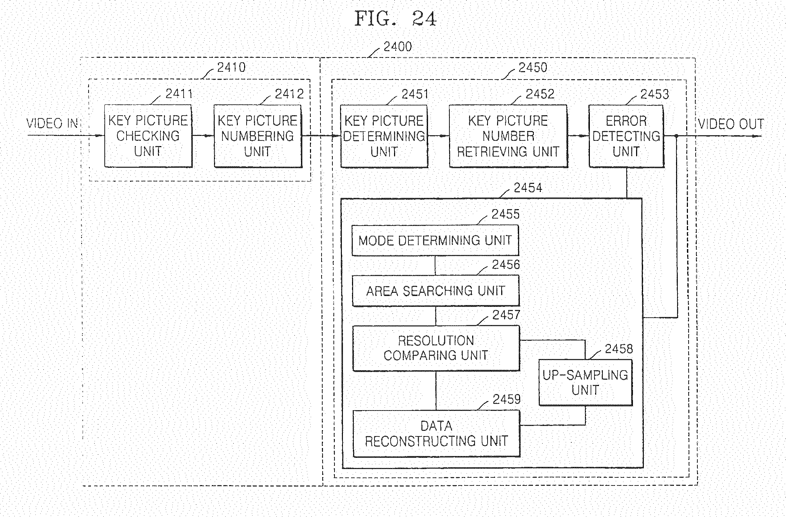

FIG. 24 is a schematic block diagram of a codec that performs numbering of key pictures and error concealment according to an embodiment of the present invention.

### MODE OF THE INVENTION

Hereinafter, a preferred embodiment of the present invention will be described in detail with reference to the attached drawings. It should be noted that like reference numerals refer to like elements throughout the specification. In the following description, a detailed description of known functions and configurations incorporated herein has been omitted for reasons of conciseness.

FIG. 7 is a flowchart illustrating an encoding method in which key pictures are numbered during picture encoding according to an embodiment of the present invention.

Once a picture is input, it is determined whether the input picture is the last picture of a group of pictures (GOP), i.e., a key picture, in operation S710. If the input picture is a key picture, a key picture number using n bits is assigned to the key picture in operation S720. In this way, key pictures are sequentially assigned key picture numbers that sequentially increase from 0 to (2ⁿ-1) using a 2ⁿ modular operation with respect to the n bits and the key picture numbers move in a cycle. For encoding with a multi-layered structure, only key pictures in an upper layer are numbered, In operation S730, encoding is terminated.

If the input picture is not a key picture, encoding is performed according to a picture mode type without numbering in operation S730.

For example, numbering of key pictures can be applied to Joint Scalable Video Coding (JSVC) by adding a 3-bit 'key_picture_number' syntax for encoding numbering of key pictures to a 'slice_header_in_scalable_extension' syntax, as follows.

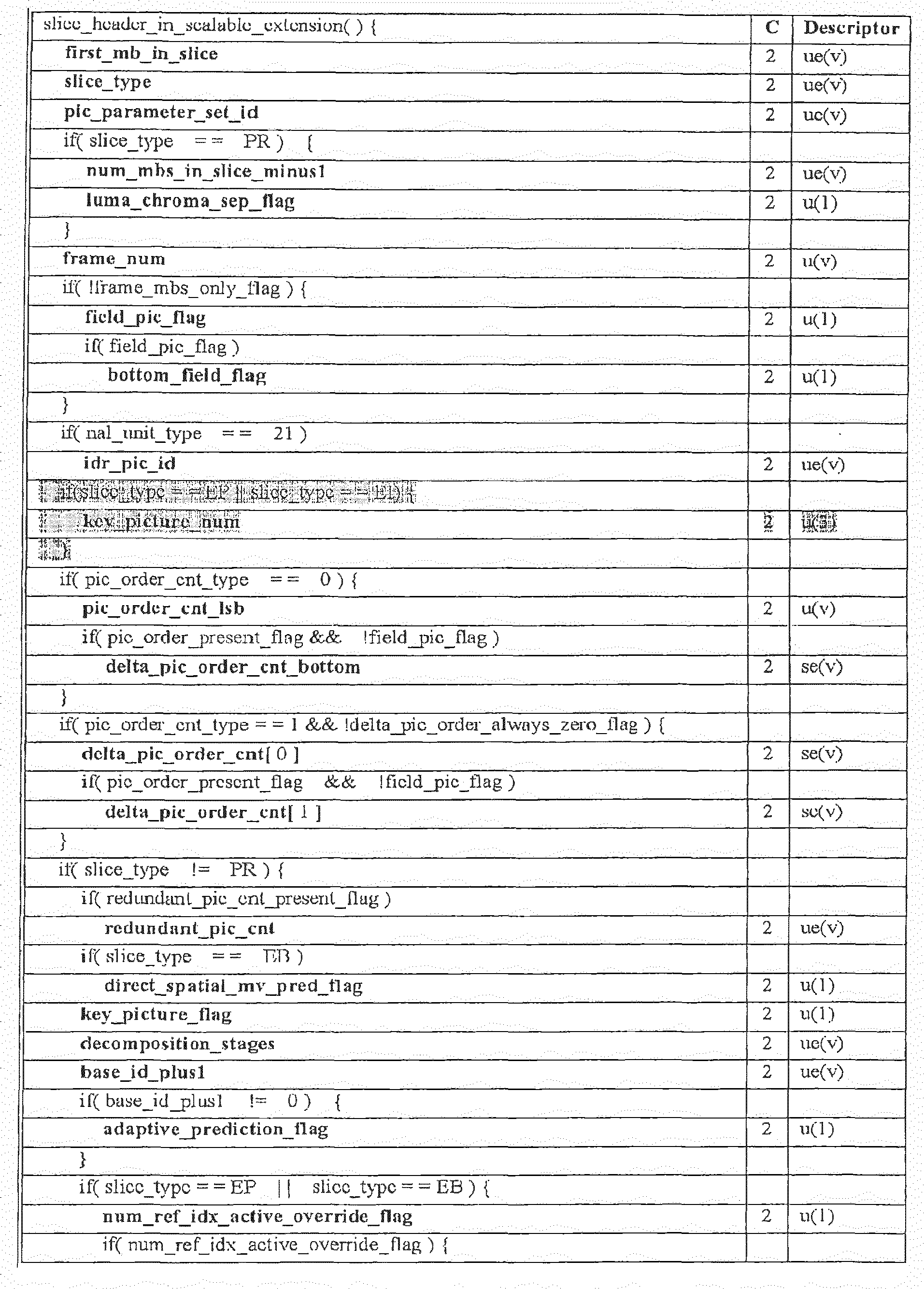

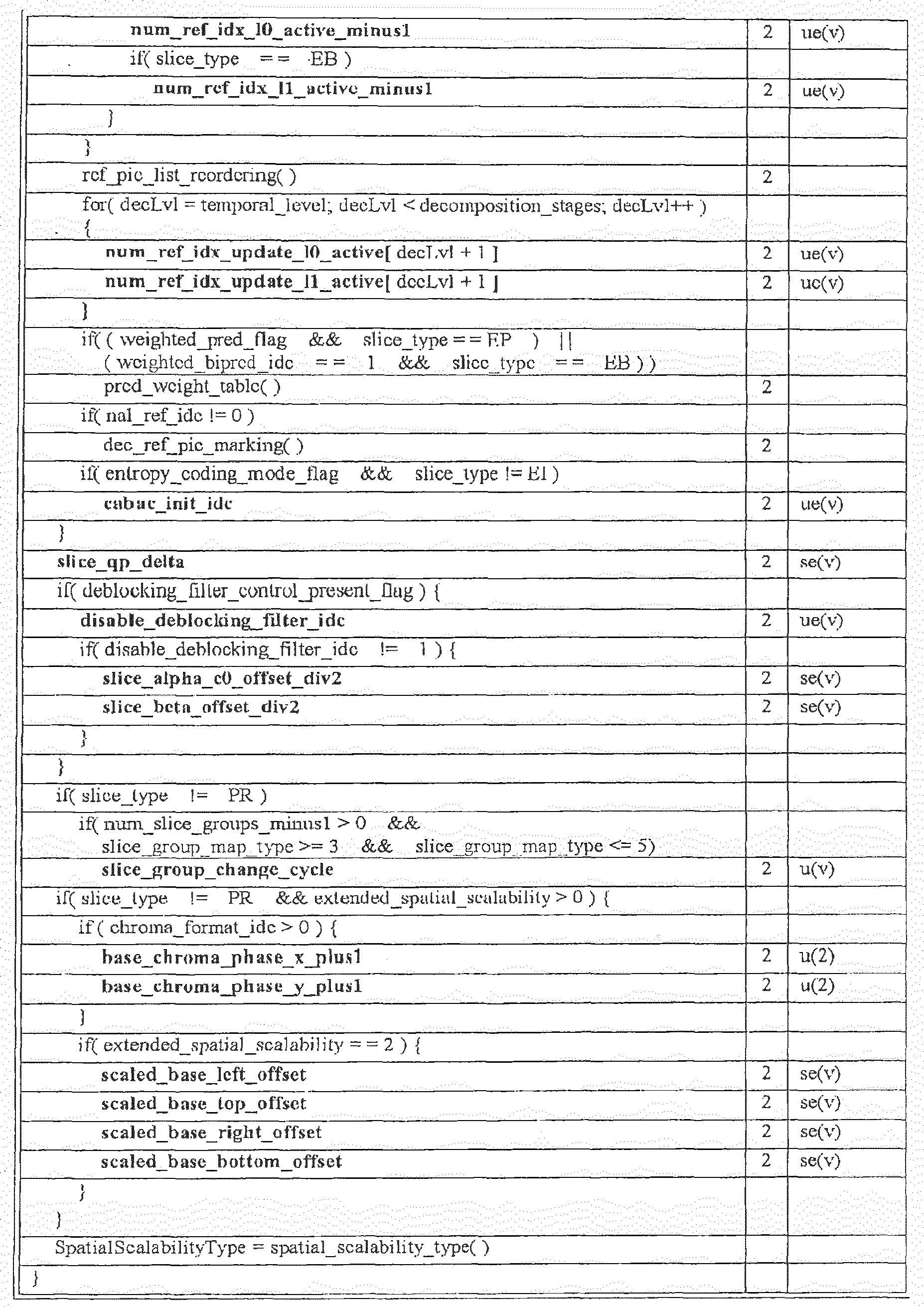

The 'key_picture_num' syntax is coded when a slice type is a predictive (P) picture or an intra (I) picture of an upper layer. Thus, when a key picture is lost, an error can be concealed using information of a lower layer. Since a base layer uses the conventional international video standard H.264 in JSVC, the 'key_picture_num' syntax is added to a slice header of the upper layer, i.e., the 'slice_header_in_scalable_extension' syntax.

FIG. 8 is a conceptual view showing the detection of a loss of a P picture using numbering of key pictures according to an embodiment of the present invention. When a P picture numbered 3 is lost, a P picture numbered 4 recognizes that its immediately previous P picture is a P picture numbered 2 and thus the P picture numbered 3 is lost. In other words, if a difference between a number assigned to a current key picture and a number assigned to a previous key picture that is input prior to the current key picture is neither 1 nor -(2ⁿ-1), the current key picture determines that a loss of a key picture has occurred. Since key pictures are sequentially assigned key picture numbers from 0 to 2ⁿ-l with n bits during encoding, if there is no loss of a key picture between a current key picture and a previous key picture, a difference between key picture numbers is 1 in a range of 0 to 2ⁿ-1 and a difference between a key picture number 2ⁿ-1 assigned to a key picture and a key picture number 0 assigned to a key picture following the key picture numbered 2ⁿ-1 is -(2ⁿ-1).

FIG. 9 is a flowchart illustrating a decoding method according to an embodiment of the present invention when key pictures are numbered using n bits as mentioned above.

When a picture (or slice) is input to an encoder, it is determined whether the current input picture is the last picture of a GOP, i.e., a key picture, in operation S920.

If the input picture is a key picture, a key picture number (key_picture_num) encoded with n bits is read from the key picture in operation S930. If the input picture is not a key picture, decoding is performed according to a mode of the input picture and thus decoding is terminated in operation S960.

A difference (key_picture_num - prev_key_picture_num) between a key picture number of the current picture and a key picture number of a previous key picture that is input immediately prior to the current picture is obtained and it is determined whether the difference is 1 or -(2ⁿ-1) in operation S940. For example, if a key picture number is encoded with 3 bits, it is determined whether a difference between a key picture number of the current picture and a key picture number of the previous key picture is 1 or -7.

If the difference is 1 or -(2ⁿ-1), decoding is performed in units of macroblocks of the current picture according to a mode of each macroblock and then decoding is terminated in operation S960.

If the difference is neither 1 nor -(2ⁿ-1), it is determined that a key picture is lost between the current key picture and the previous key picture and key picture loss information is transmitted to an error processing unit (error concealment unit) in order to process an error in operation S950. Decoding is then terminated in operation S960.

FIG. 10 illustrates an example of error propagation when a single P picture is lost during transmission in the upper layer illustrated in FIG. 5 in which key pictures are numbered.

When key pictures are numbered in an upper layer and a P picture numbered 3 is lost during transmission, the P picture numbered 4 following the P picture numbered 3 recognizes a loss of a P picture because a key picture number of a key picture preceding the P picture numbered 4 is 2 and a difference between key picture numbers of the current P picture numbered 4 and the preceding P picture numbered 2 is not 1 but 2.

Hereinafter, error concealment for scalable video coding (SVC) will be described as an example of effective action that can be taken against to an error when the error is detected using numbering of key pictures as mentioned above.

FIG. 11 is a conceptual view showing a method of preventing error propagation using information of a lower layer when a loss of a P picture is recognized using numbering of key pictures as illustrated in FIG. 10.

When information of a lower layer can be used in the case of a loss of a P picture in an upper layer in SVC with a multi-layered structure, an error caused by the loss of a P picture can be processed using the information of the lower layer. If a macroblock of the upper layer is encoded in an inter mode in which predictive-encoding is performed using a correlation between pictures, a reference is lost and thus a decoded image in a lower layer is used. If a macroblock of the upper layer is encoded in an intra mode in which coding is performed using a correlation within a picture, coding is performed using a conventional decoding method, In this way, the error propagation to P pictures following the current P picture can be minimized.

FIG. 12 is a flowchart illustrating a method in which information on a lower layer is used when a loss of a previous P picture in an upper layer is detected according to an embodiment of the present invention.

Once a key picture is input, it is determined whether there is a loss of a P picture between the current key picture and a previous key picture that is input prior to the current key picture using a difference between key picture numbers of the current key picture and the previous key picture in operation S1210.

If there is no loss of a P picture, decoding is performed in units of macroblocks of the current key picture according to a mode of each macroblock, in operation S1270. If there is a loss of a P picture, it is determined whether a mode is the inter mode or the intra mode for each macroblock of the current key picture, in operation S1220.

If the mode of a macroblock of the current key picture is not the inter mode, decoding is performed according to the current mode, in operation S1270. If the mode of a macroblock of the current key picture is the inter mode, an area corresponding to the macroblock of the current key picture is searched for in a decoded image of the lower layer that is temporally matched with the current key picture, in operation S1230.

Afterwards, spatial resolutions of the upper layer and the lower layer are compared with each other in operation S1240, in order to determine whether the spatial resolutions are equal to each other.

If the spatial resolutions are equal to each other, image data of the area of the lower layer, which is found to correspond to the macroblock of the current key picture, is copied in order to be added to the macroblock of the current key picture of the upper layer, thereby reconstructing data of the current key picture in operation S1260.

If the spatial resolutions are not equal to each other, the area of the lower layer, which is found to correspond to the macroblock of the current key picture, is up-sampled so as to be the same size as the upper layer in operation S1250.

Then image data of the up-sampled area is copied in order to be added to the macroblock of the current key picture of the upper layer, thereby reconstructing data of the current key picture in operation S1260.

If the probability of an error being generated by a loss of a key picture is low due to the nature of a network, error concealment may be unnecessary. In this case, it is desirable to reduce the amount of specific bits for numbering of key pictures by selectively using numbering of key pictures. In other words, 'error_concealment_flag' is added to 'sequence_parameter_set' during numbering of key pictures only when a loss of a key picture is expected and thus error concealment is required. The 'sequence_parameter_set' syntax may be as follows.

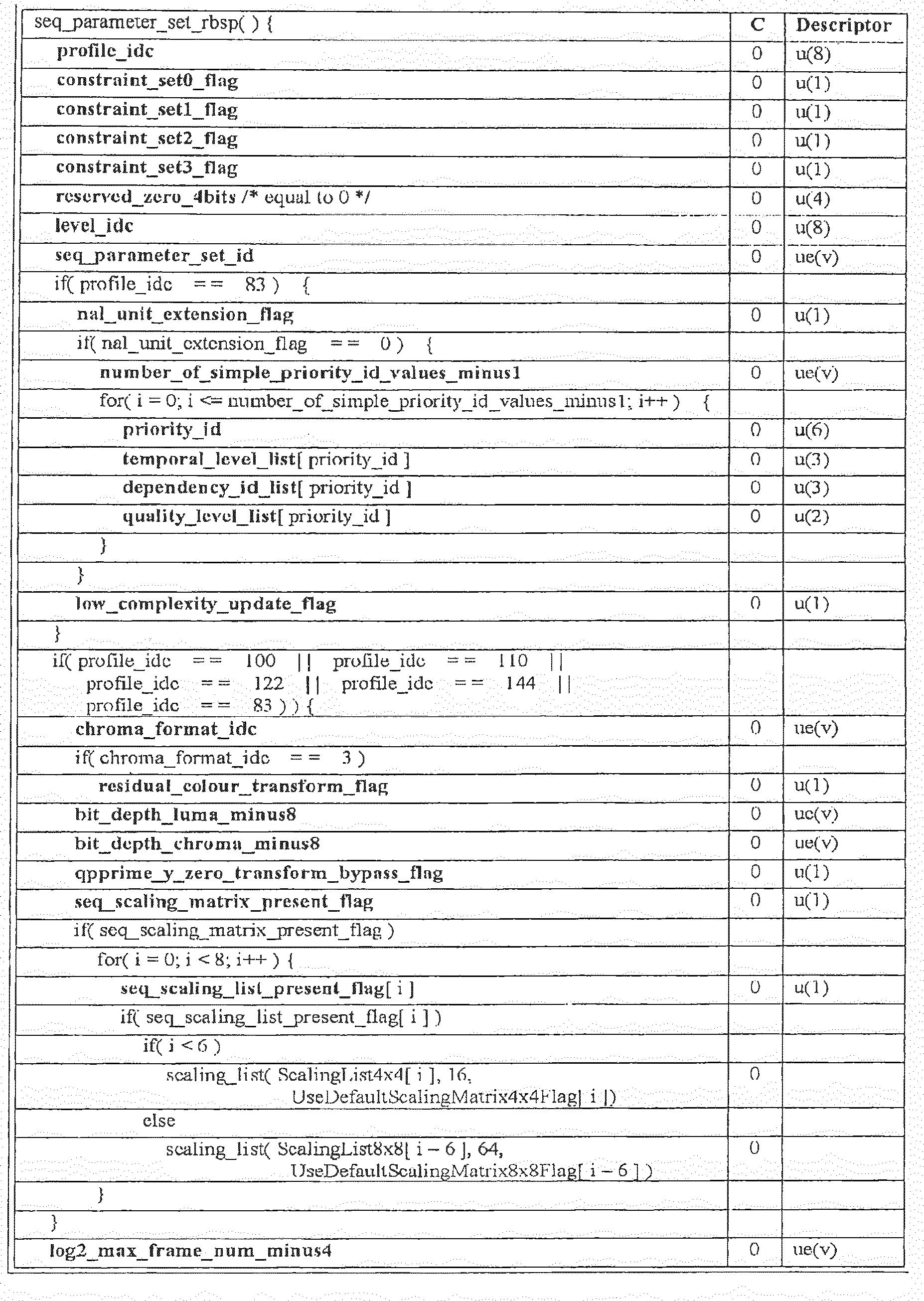

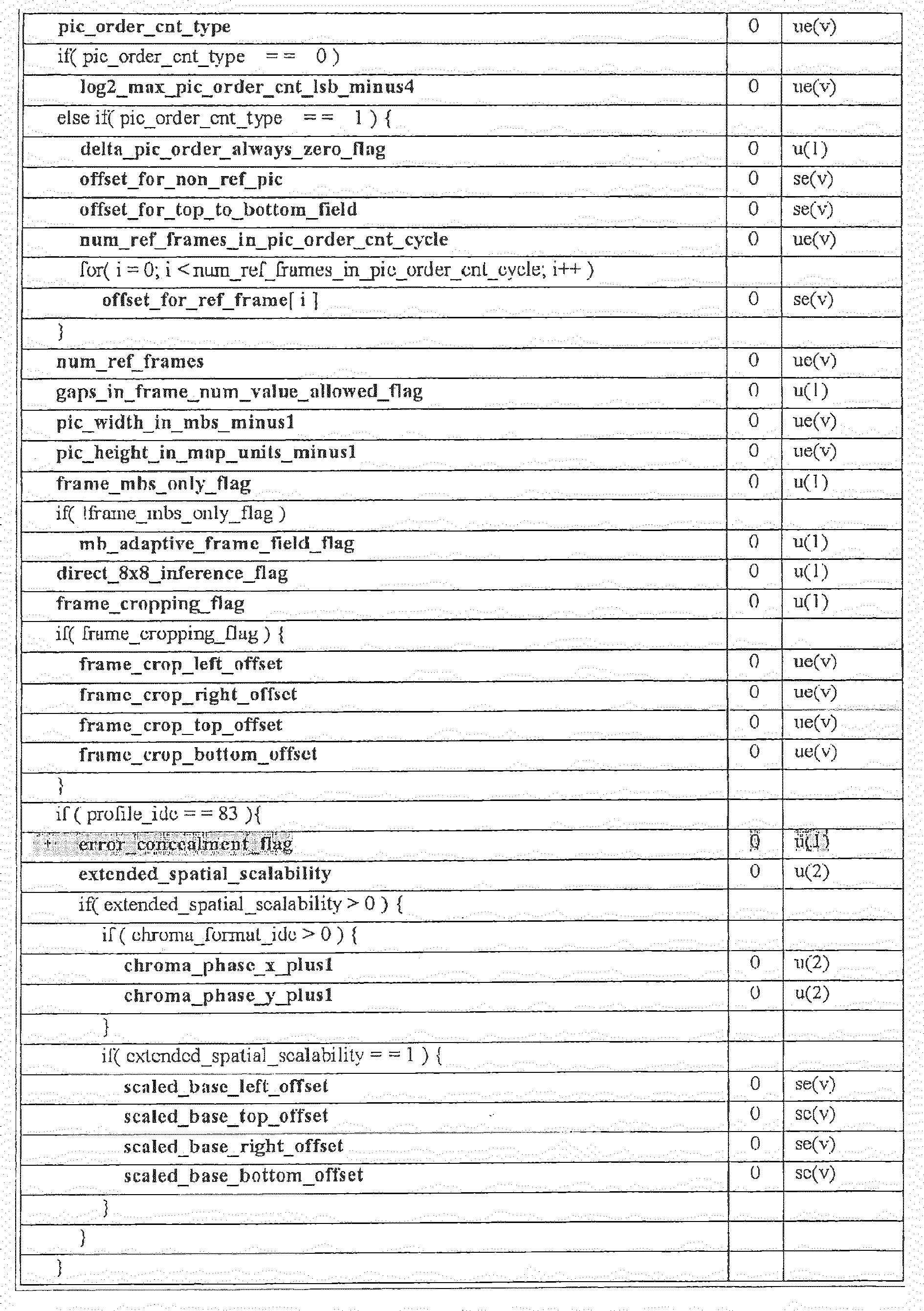

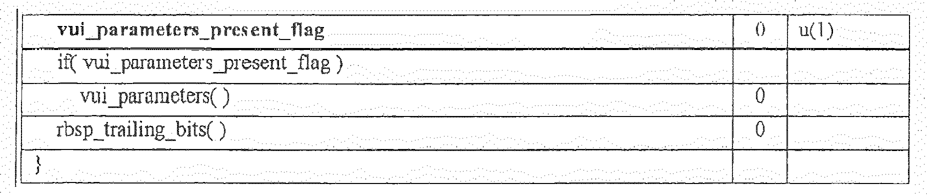

The 'slice_header_in_scalable_extension' syntax may be changed as follows so that numbering of key pictures can be performed only when 'error_concealment_flag' is 1.

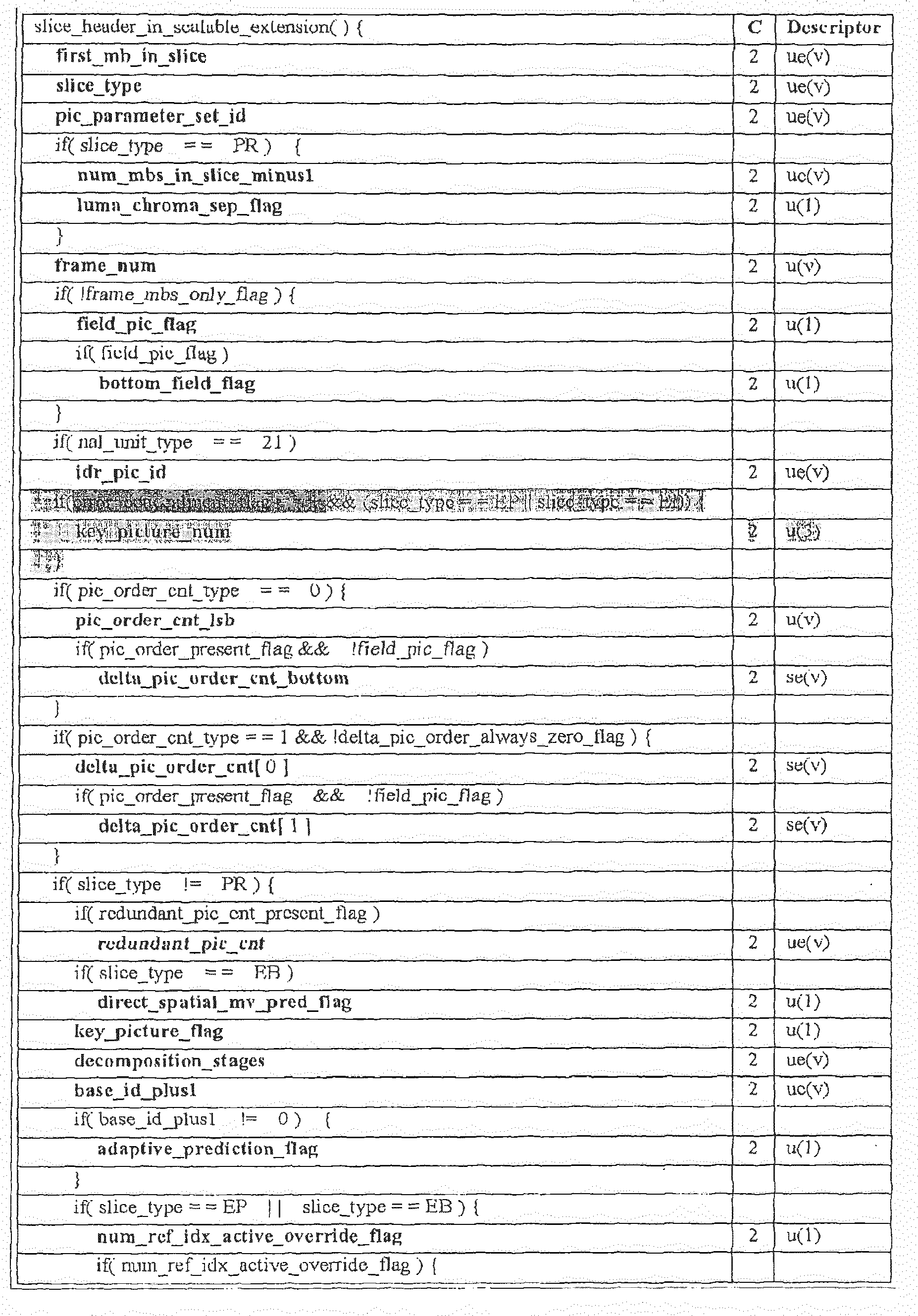

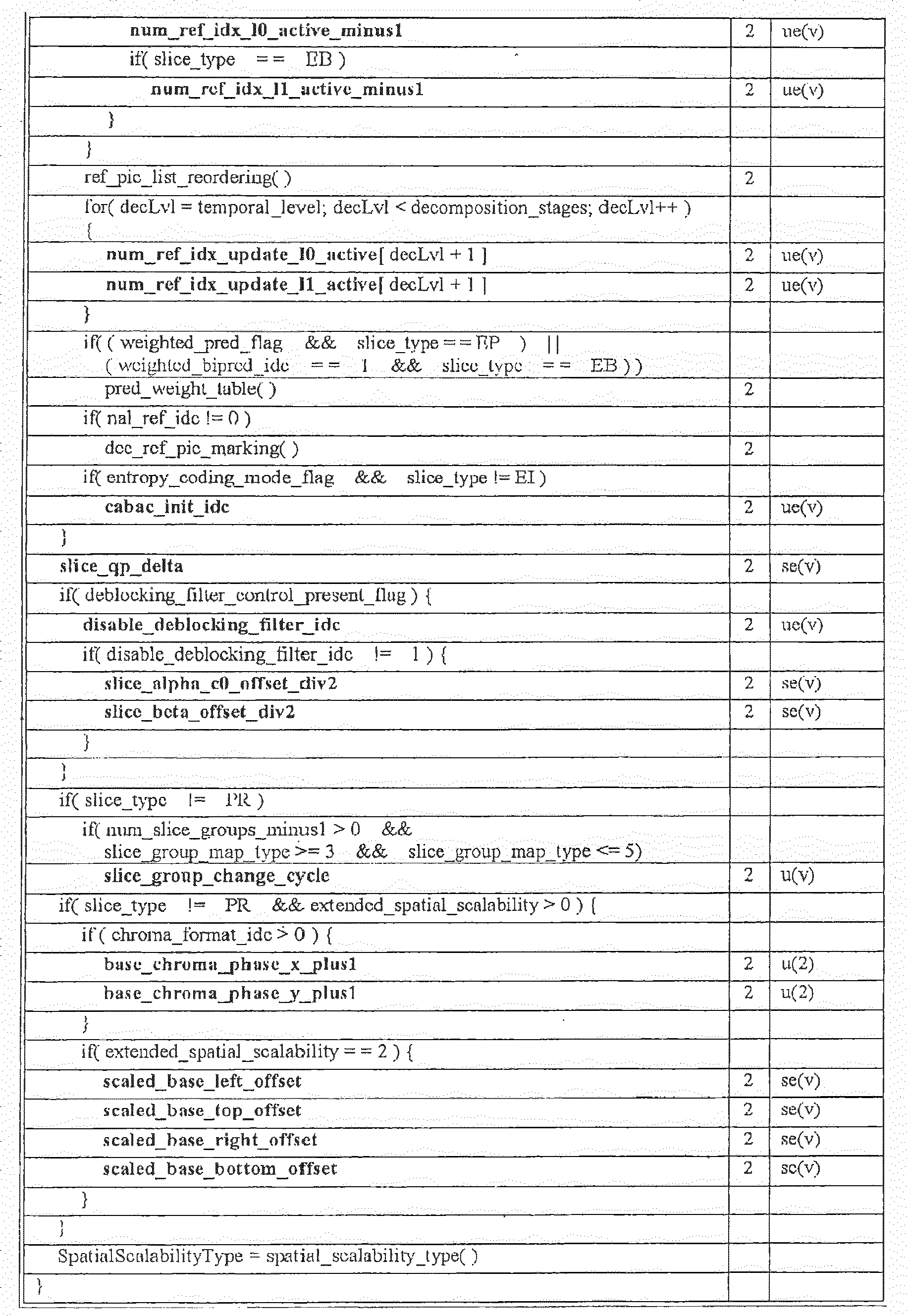

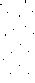

FIG. 13 is a flowchart illustrating a decoding method according to an embodiment of the present invention when numbering of key pictures is performed only when 'error_concealment_flag' is 1.

In the current embodiment of the present invention, 'error_concealment_flag' and _{'}key_picture_num'are coded using 3 bits.

Once a picture is input, it is determined whether the input picture is a key picture and whether 'error_concealment_flag' is 1 in operation S1310.

If 'error_concealment_flag' is 0 or the input picture is not a key picture, decoding is performed according to a predetermined mode and is then terminated in operation S1350.

If 'error_concealment_flag' is 1 and the input picture is a key picture, a key picture number (key_picture_num) encoded using n bits is read from the key picture, in operation S1320.

Next, it is determined whether a difference between the key picture number (key_picture_num) of the current key picture and a key picture number (prev_key_picture_num) of a previous key picture that is input prior to the current key picture is 1 or-7 in operation S1330.

If the difference is 1 or -7, decoding is performed according to the predetermined mode and is then terminated in operation S1350.

If the difference is neither 1 nor -7, it is recognized that an error is generated due to a loss of a key picture between the current key picture and the previous key picture and error information is transmitted in order to process an error in operation S1340. Decoding is then terminated in operation S1350.

Hereinafter, the application of a coding method according to an embodiment of the present invention to an adaptive GOP structure (AGS) will be described as an example of effective action that can be taken against an error using numbering of key pictures. An AGS coding method that is currently employed as an encoder issue of MPEG-4 JSVC JSVM 3.0 does not support temporal scalability less than 7.5Hz on a time axis.

FIG. 14 illustrates an example of AGS coding. Referring to FIG. 14, a base layer having a frame rate of 15Hz is AGS coded in units of GOPs having a size of 16 and [8, 2, 2, 2, 2] is selected as a sub-GOP mode. In an upper enhancement layer, coding is performed in [16, 4, 4, 4] mode according to the sub-GOP mode of the base layer and 'temporal_level' for providing temporal scalability is coded.

In this example, temporal scalability is designed so that pictures having a high 'temporal_level' are sequentially eliminated from an extractor and thus the temporal resolutions of the GOPs are halved. The base layer cannot have a 'temporal_level' if complying with H.264 and thus a picture that cannot be referred to by any image is dropped from the extractor using 'nal_ref_idc' of an NAL unit header, thereby halving the temporal resolution of the base layer.

FIG. 15 illustrates an example of an image that has a frame rate of 15Hz by dropping pictures having a 'temporal_level' of 5 in the upper layer illustrated in FIG. 14 from the extractor.

FIG. 16 illustrates an example of an image that has a frame rate of 7.5Hz by dropping pictures having a 'temporal_level' of higher than 4 in the upper layer of FIG. 14 from the extractor.

FIG. 17 illustrates an example of an image in which key pictures having a 'temporal_level' higher than 3 in second and fourth GOPs in the upper layer illustrated in FIG. 16 are dropped together in order to provide a frame rate of, for example, 3.75Hz when temporal scalability less than 7.5Hz (3.75Hz or 1.875Hz) is required due to constraints on a transmission line. In other words, FIG. 17 illustrates an example of an image having an error caused by the dropping of a key picture when pictures having a 'temporal_level' higher than 3 in FIG. 14 are dropped in order to support a frame rate of 3.75Hz.

Since the extractor performs processing only with information of the NAL unit header without referring to an internal syntax of a visual bitstream, a key picture may also be dropped. Although a key picture is dropped, a decoder cannot recognize the dropping of the key picture and thus performs decoding with an incorrect reference, resulting in an inability to prevent an error.

FIG. 18 illustrates decoding results (pictures #0 through #7) broken due to an incorrect reference in an actual image, football CIF 3.75Hz.

FIG. 19 is a view in which an error is handled using information on a lower base layer when a loss of a key picture in an upper layer is recognized using numbering of key pictures illustrated in FIG. 17.

In other words, when an AGS is used, an error generated by the dropping of a key picture so as to support a required frame rate can be processed using numbering of key pictures. Referring to FIG. 19, when a key picture numbered 2 is lost, a key picture numbered 3 recognizes that a key picture to be referred to is lost because its preceding key picture is numbered 1, and data of an area corresponding to an inter macroblock of the upper layer is copied from a decoded and reconstructed image of the lower base layer to the inter macroblock of the upper layer of the current key picture for error concealment.

FlG. 20 illustrates results of decoding with respect to the image, football CIF 3.75Hz, illustrated in FIG. 18 according to the method illustrated in FIG. 19. The results of error concealment by copying data from the base layer can be seen in FIG. 20.

In this way, a 'sequence_parameter_set' syntax and the 'slice_header_in_scalable_extension' syntax can be changed in an embodiment of JSVC. When low temporal scalability, e.g., lower than 7.5Hz, is supported in an AGS, a loss of a key picture occurs. Thus, when an AGS is coded, 'use_ags_flag' indicating whether an AGS is used or not may be added to 'sequence_parameter_set', as follows.

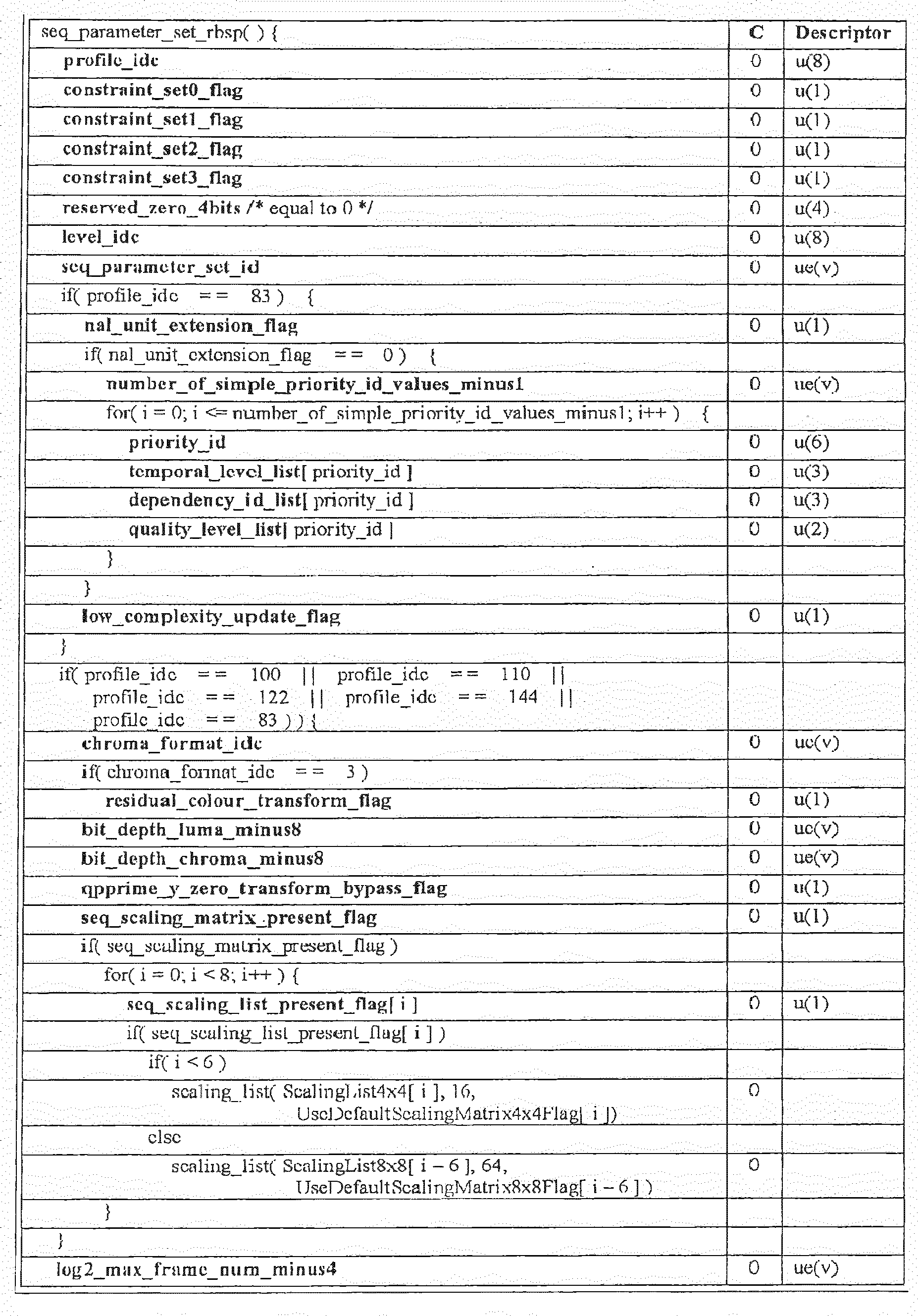

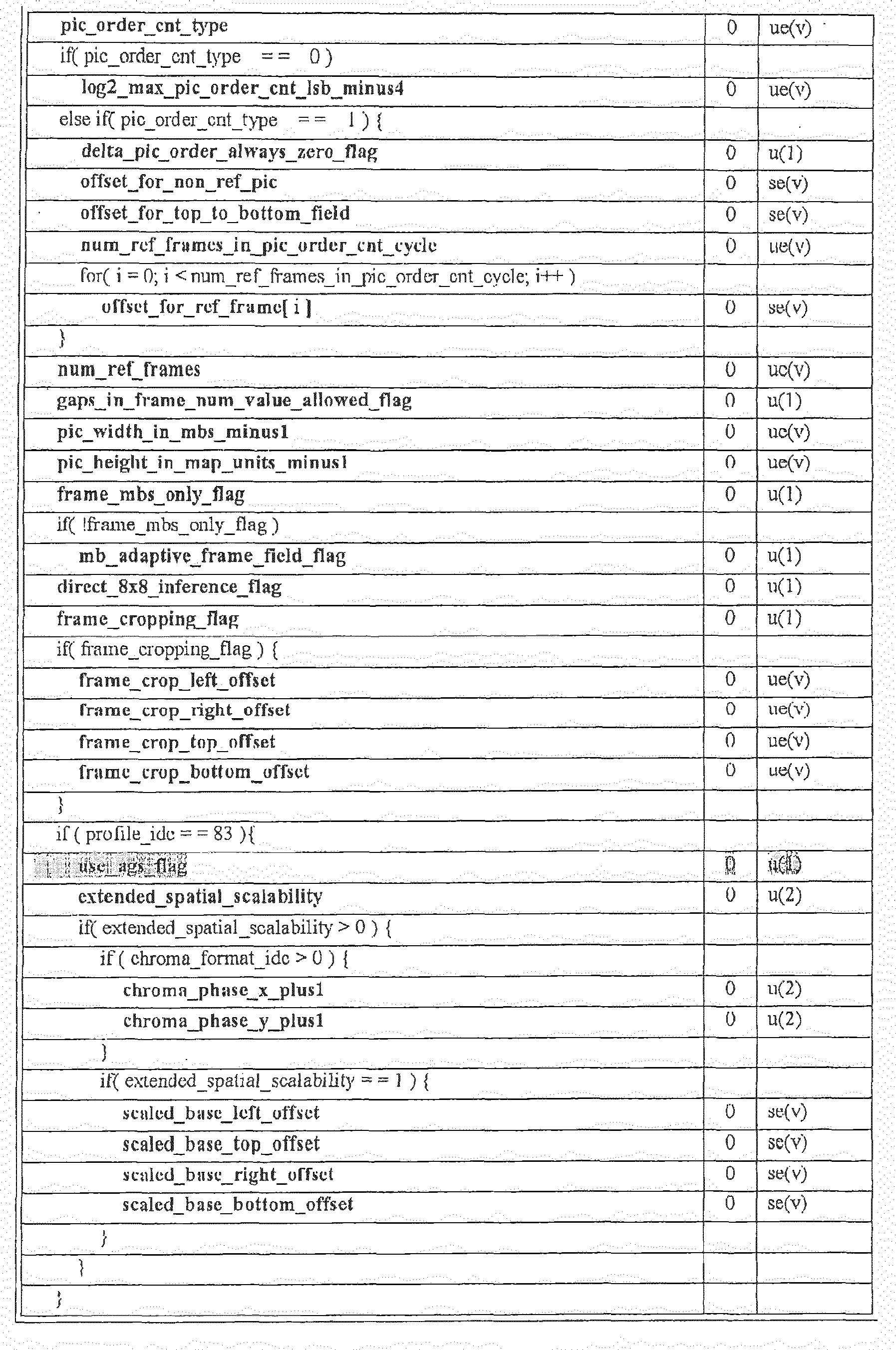

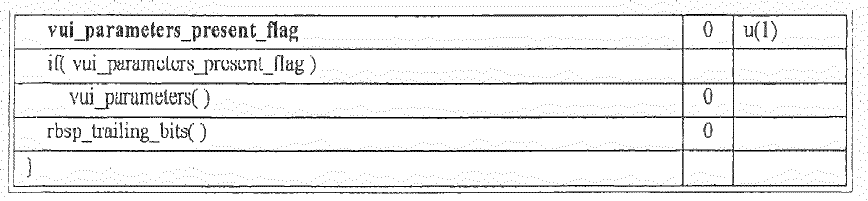

The 'slice_header_in_scalable_extension' syntax can be changed as follows so that numbering of key pictures can be performed only when 'use_asg__flag' is 1.

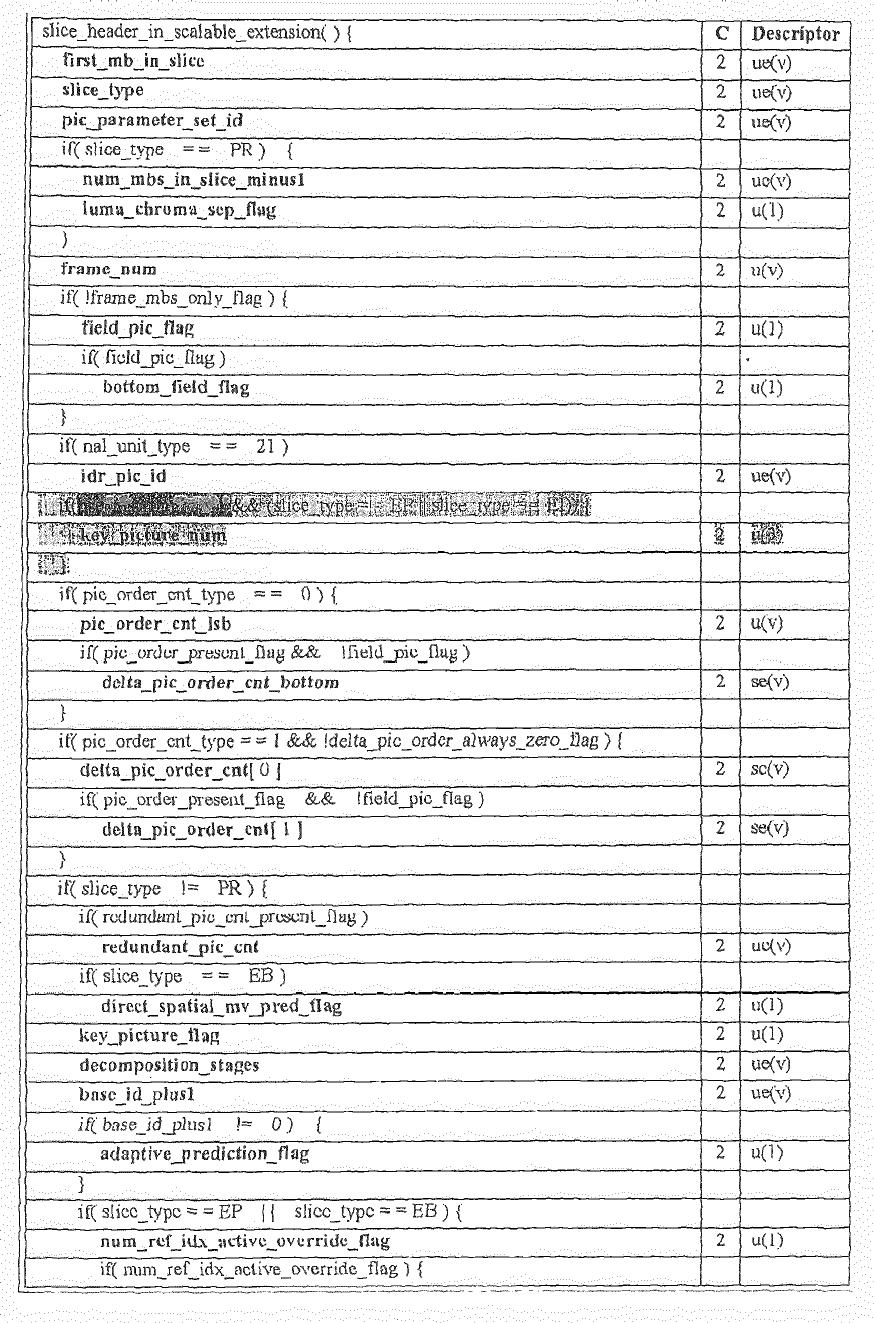

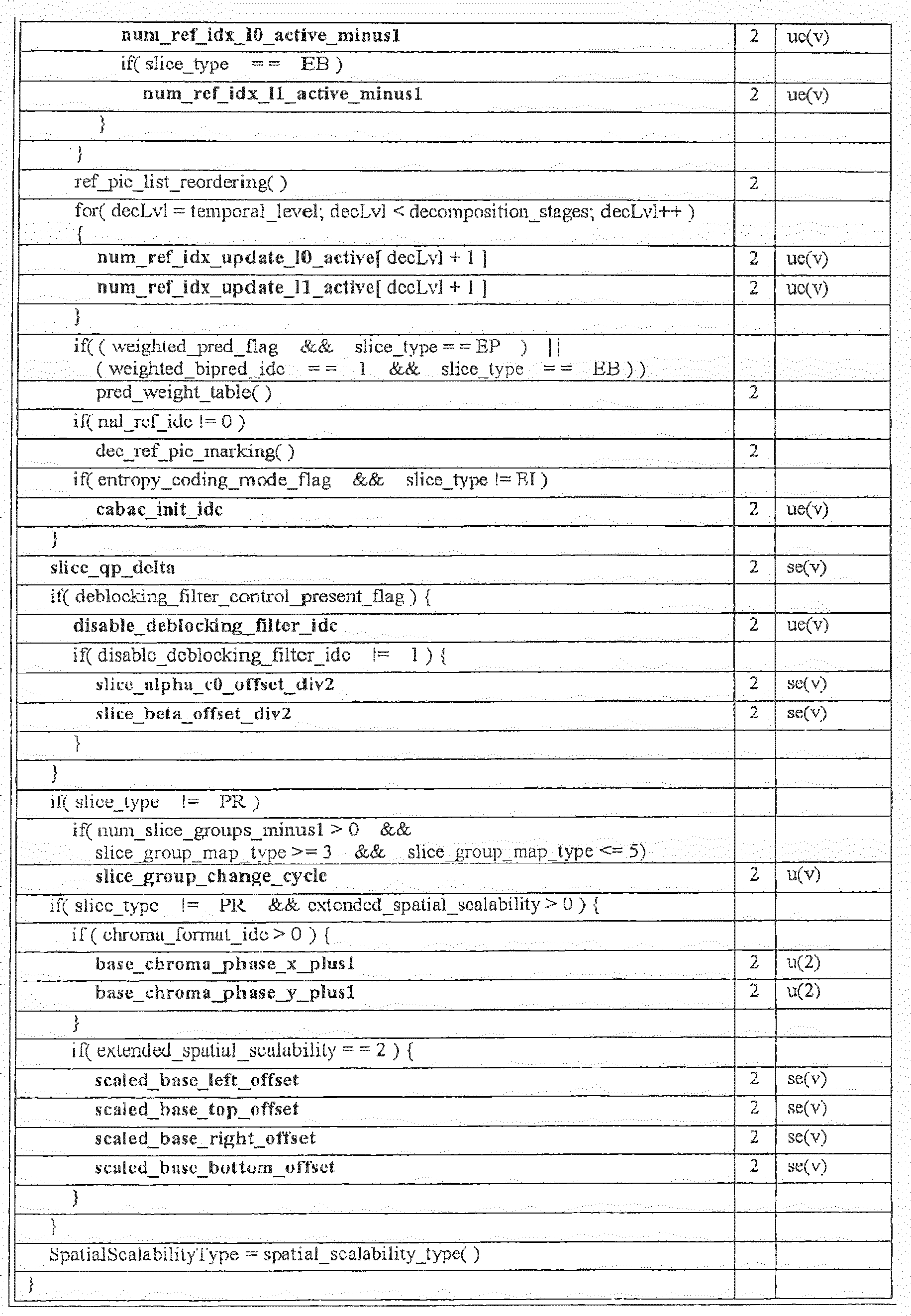

FIG. 21 is a flowchart illustrating a decoding method according to an embodiment of the present invention when 'use_ags_flag' and 'key_picture_num' are coded using 3 bits.

Once a picture (or slice) is input, it is determined whether 'use_ags_flag' is 1 and whether the picture is a key picture in operation S2110.

If 'use_ags_flag' is 0 or the input picture is not a key picture, decoding is performed according to a mode of each macroblock of the picture and is then terminated in operation S2150.

If 'use_ags_flag' is 1 or the input picture is a key picture, a key picture number (key_picture_num) encoded using n bits is read from the key picture in operation S2120.

It is determined whether a difference (key_picture_num - prev__key_picture_num) between the key picture number (key_picture_num) of the current key picture and a key picture number (prev_key_picture_num) of a previous key picture that is input immediately prior to the current key picture is 1 or -7 in operation S2130.

If the difference is neither 1 nor -7, it is determined that a loss of a key picture between the current key picture and the previous key picture has occurred and an error is processed in operation S2140.

Decoding of the current key picture is terminated together with error concealment in operation S2150.

If an error is detected using numbering of key pictures, as an example of what effective action can be taken against the error, error concealment bits and AGS use bits may be shared in 'sequence_parameter_set' in JSVC as follows, in order to process error concealment and an AGS. To this end, 'error_concealment_flag' is added to 'sequence_parameter_set' and is fixed to 1 if an AGS is used, thereby supporting a low frame rate lower than 7.5Hz. The 'sequence_parameter_set' syntax is as follows.

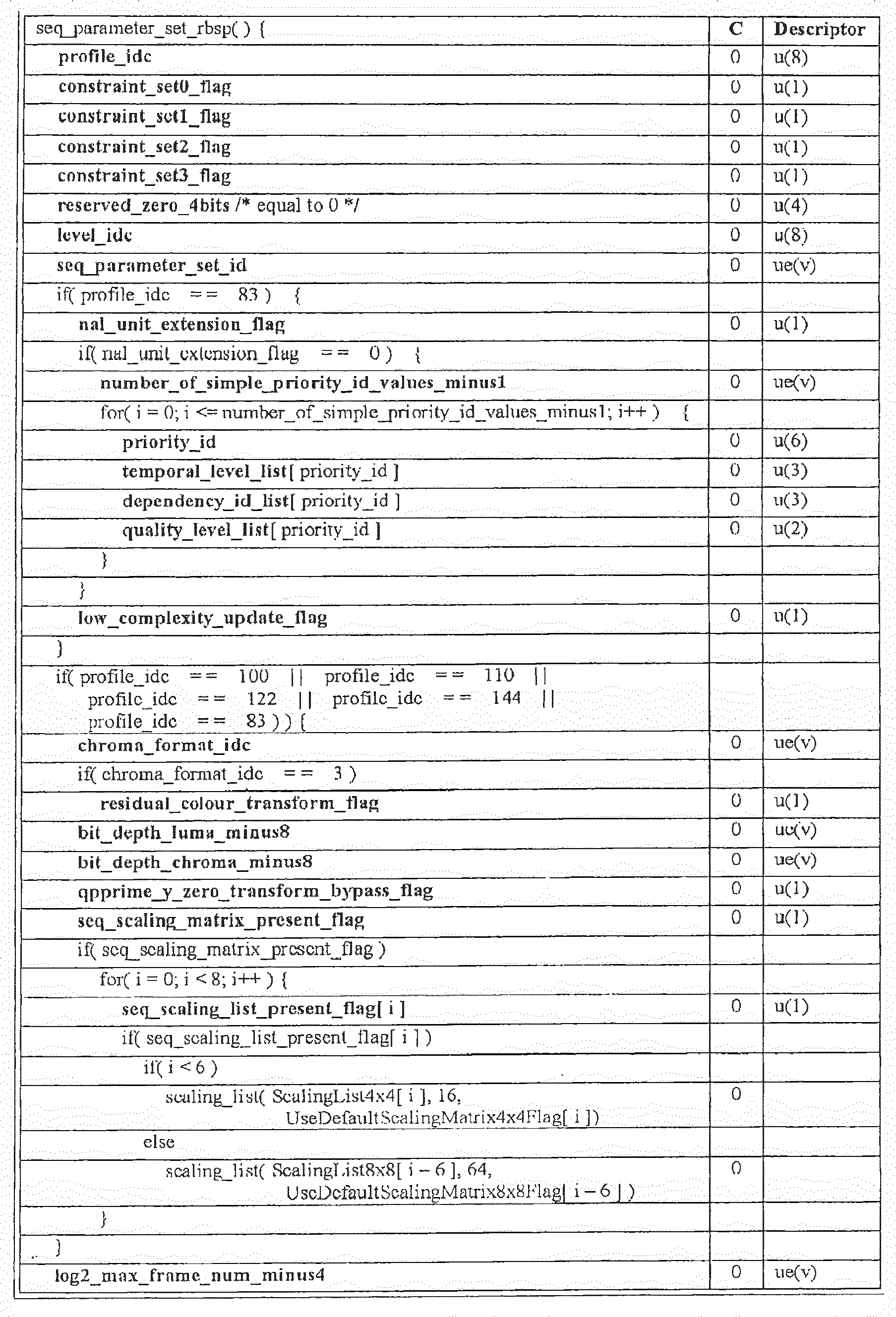

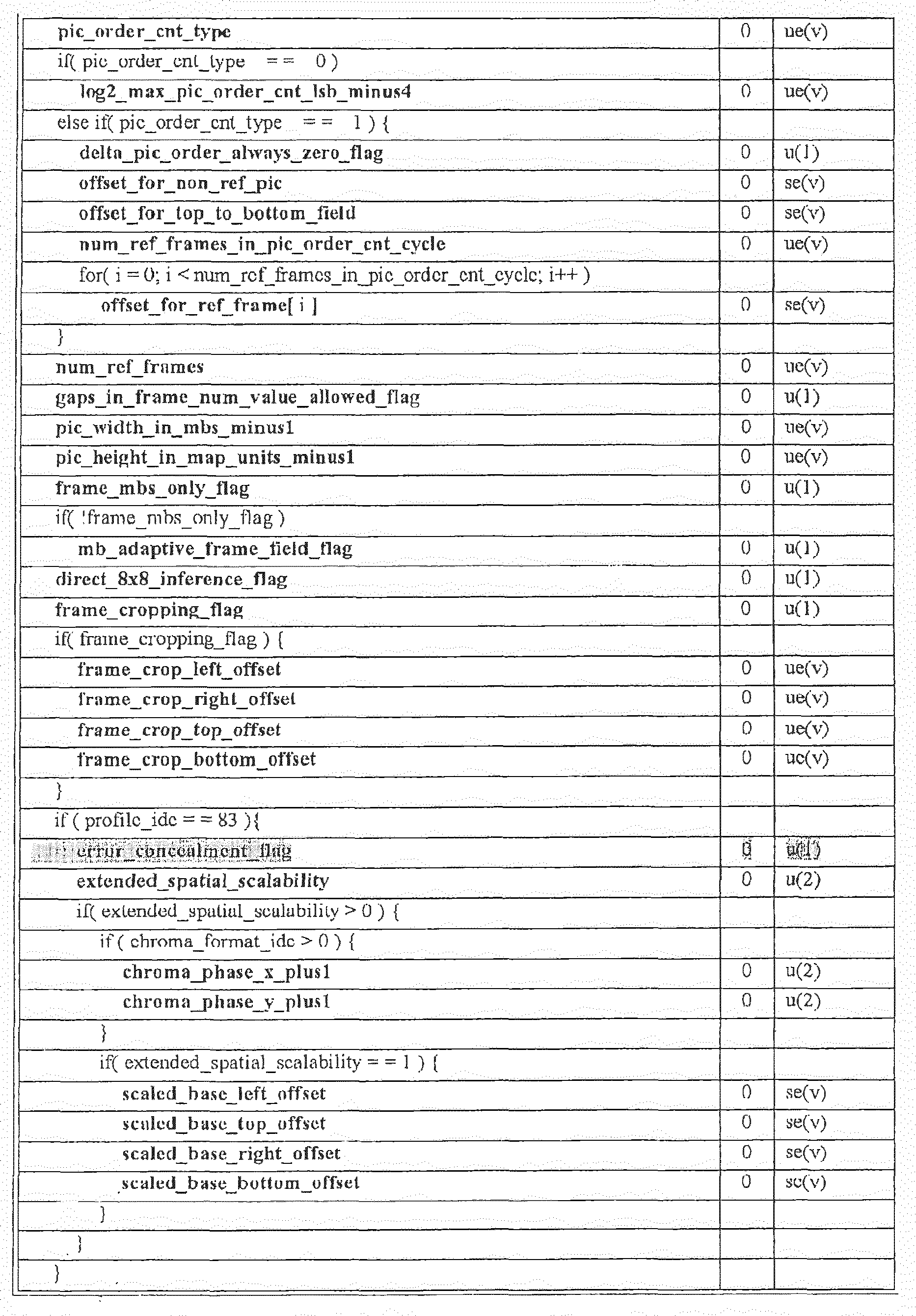

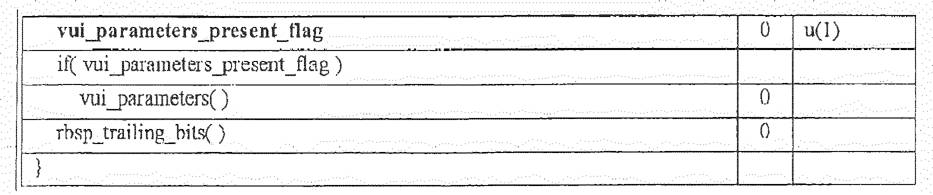

The 'slice_header_in_scalable_extension' syntax may be changed as follows so that numbering of key pictures can be performed only when 'error_concealment_flag' is 1.

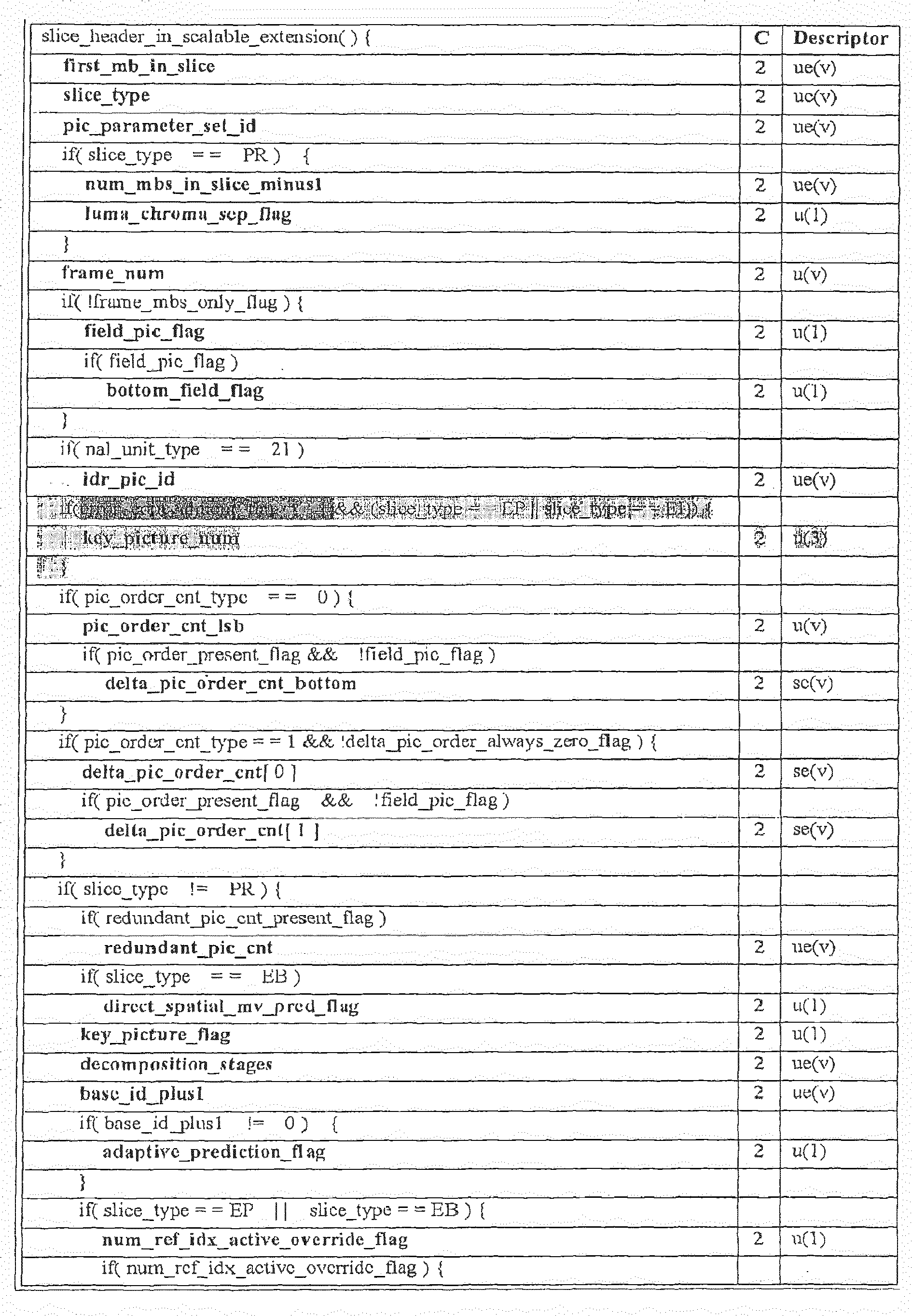

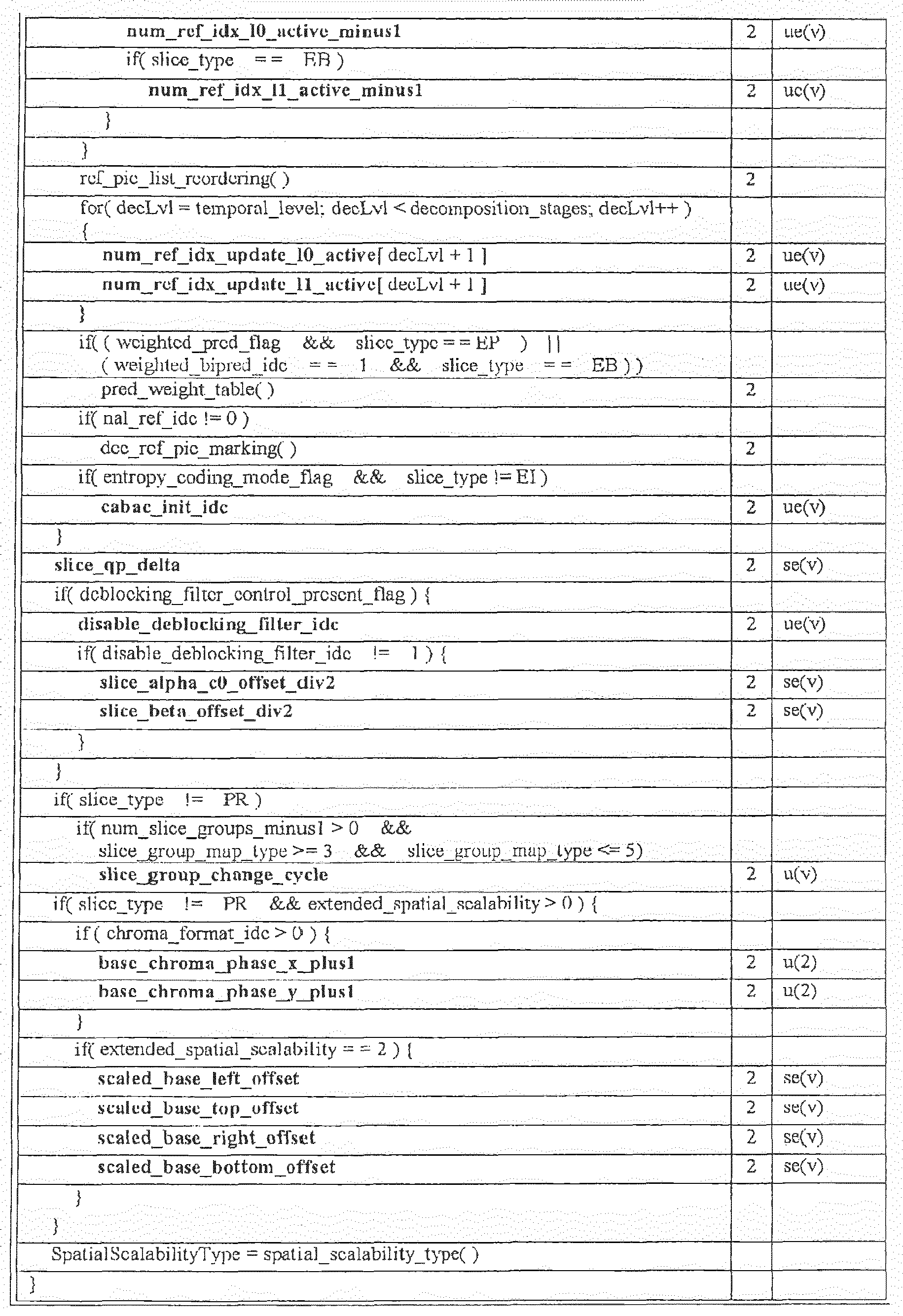

A decoding method according to an embodiment of the present invention when 'error_concealment_flag' and 'key_picture_num' are coded using 3 bits is the same as illustrated in FIG. 13.

FIG. 22 is a schematic block diagram of an encoder 2200 that implements an encoding method including numbering of key pictures according to an embodiment of the present invention.

Referring to FIG. 22, the encoder 2200 includes a key picture checking unit 2210 and a key picture numbering unit 2250.

The key picture checking unit 2210 checks if an input current picture is the last picture of a GOP that refers to a previous picture, i.e., a key picture.

If the input current picture is a key picture, the key picture numbering unit 2250 assigns a number to the key picture, thereby assigning key picture numbers that sequentially increase from 0 to (2ⁿ-1) using a 2ⁿ modular operation with respect to n bits and the key picture numbers move in a cycle. The key picture numbering unit 2250 may assign a key picture number to the current input picture using n bits only when the current input picture requires error concealment and is a key picture or the current input picture uses an AGS and is a key picture.

By performing encoding with numbering of key pictures, a loss of a key picture can be recognized based on a difference between pictures and an error can be processed by, for example, error concealment when decoding is performed by referring to consecutive key pictures. In this way, it is possible to minimize degradation in image quality due to error propagation caused by an incorrect reference.

FIG. 23 is a schematic block diagram of a decoder 2300 that implements a method of decoding an image encoded with numbering of key pictures according to an embodiment of the present invention.

Referring to FIG. 23, the decoder 2300 includes a key picture determining unit 2310, a key picture number retrieving unit 2330, an error detecting unit 2350, and an error concealing unit 2370.

The key picture determining unit 2310 determines whether a current input picture is the last picture of a GOP that refers to a previous picture, i.e., a key picture.

The key picture number retrieving unit 2330 reads an encoded key picture number from the current key picture if the key picture determining unit 2330 determines the current input picture to be a key picture.

The error detecting unit 2350 includes a difference comparing unit 2351 and an error information transmitting unit 2352. The difference comparing unit 2351 compares a difference (key_picture_num - prev_key_picture_num) between the key picture number (key_picture_num) of the current key picture and a key picture number (prev-key_picture_num) of a previous key picture that is input immediately prior to the current key picture to 1 or -(2ⁿ-1). If the difference is neither 1 nor -(2ⁿ-1), the error information transmitting unit 2352 determines that there is a loss of a key picture between the current key picture and the previous key picture and transmits error information indicating the loss to the error processing unit and/or error concealing unit 2370. The error processing unit and/or error concealing unit 2370 receives the error information and processes the error according to a predetermined method, thereby minimizing error propagation.

The error concealment unit 2370 also performs an error concealment method according to an embodiment of the present invention that can be applied to a case where SVC having a multi-layered structure is performed and thus an upper layer can use information of a lower layer.

The error concealment unit 2370 includes a mode determining unit 2371, an area searching unit 2372, a resolution comparing unit 2373, an up-sampling unit 2374, and a data reconstructing unit 2375.

If the error detection unit 2350 determines that there is a loss of a key picture between the current key picture and the previous key picture, it indicates that a reference key picture for the current key picture is lost. Therefore, error propagation by performing decoding with reference to the previous key picture can be prevented.

When an error due to a loss of a key picture in the upper layer is detected, the mode determination unit 2371 determines whether each macroblock of the current key picture is in an inter mode or an intra mode.

When a corresponding macroblock is determined to be in the inter mode, the area searching unit 2372 selects a picture that is temporally matched with the current key picture from the lower layer and searches in a decoded image of the selected picture of the lower layer for an area corresponding to the macroblock of the current key picture of the upper layer.

After the area corresponding to the macroblock of the current key picture is found in the picture of the lower layer, the resolution comparing unit 2373 compares the spatial resolution of the upper layer with the spatial resolution of the lower layer to determine whether the spatial resolutions are equal to each other.

If the spatial resolutions are equal to each other, the data reconstructing unit 2375 copies data of the decoded image of the area of the lower layer, which is found to correspond to the macroblock of the current key picture of the upper layer, to the macroblock of the current key picture of the upper layer, thereby performing decoding. If the spatial resolutions are not equal to each other, the up-sampling unit 2374 up-samples the area of the lower layer, which is found to correspond to the macroblock of the current key picture of the upper layer, so as to be the same size as the upper layer by using interpolation and copies data of a decoded image of the up-sampled area to the macroblock of the current key picture of the upper layer, thereby performing decoding.

By performing decoding using error concealment in which image information of a picture of a lower layer that is temporally matched with an upper layer is applied to decoding of the upper layer, it is possible to conceal an error generated by referring to a key picture that precedes a lost key picture, instead of referring to the lost key picture.

FIG. 24 is a schematic block diagram of a codec 2400 that performs coding according to an embodiment of the present invention.

Referring to FIG. 24, the codec 2400 includes an encoder 2410 and a decoder 2450.

The encoder 2410 performs encoding by numbering key pictures for distinguishing the end of each GOP and transmits the encoded key pictures to the decoder 2450.

The decoder 2450 receives the numbered key pictures and determines if there is a loss of a key picture between the key pictures. If there is a lower layer with respect to an upper layer having a lost key picture and image information of the lower layer can be used, an error is concealed using the image information and the current key picture is decoded.

The encoder 2410 includes a key picture checking unit 2411 and a key picture numbering unit 2412.

The key picture checking unit 2411 checks if a current input picture is a key picture. If the input current picture is a key picture, the key picture numbering unit 2412 assigns a number to the key picture, thereby assigning key picture numbers that sequentially increase from 0 to (2ⁿ-1) using a 2ⁿ modular operation with respect to n bits and the key picture numbers move in a cycle, The key picture numbering unit 2412 may assign a key picture number to the input current picture using n bits only when the input current picture requires error concealment and is a key picture or the input current picture uses an AGS and is a key picture.

The decoder 2450 includes a key picture determining unit 2451, a key picture number retrieving unit 2452, an error detecting unit 2453. and an error concealing unit 2454.

The key picture determining unit 2451 determines whether a current input picture is a key picture. The key picture number retrieving unit 2452 reads an encoded key picture number from the current key picture if the key picture determining unit 2451 determines the current input picture to be a key picture.

The error detecting unit 2453 compares a difference (key_picture_num - prev_key_picture_num) between the key picture number (key_picture num) of the current key picture and a key picture number (prev_key_picture_num) of a previous key picture that is input immediately prior to the current key picture to 1 or -(2ⁿ-1) in a comparing unit (not shown). If the difference is neither 1 nor -(2ⁿ-1), an error information transmitting unit (not shown) determines that there is a loss of a key picture between the current key picture and the previous key picture and transmits error information indicating the loss to the error concealing unit 2454. The error concealing unit 2454 receives the error information and processes the error according to a predetermined method, thereby minimizing error propagation.

The error concealment unit 2454 also performs an error concealment method according to an embodiment of the present invention that can be applied to a case where SVC having a multi-layered structure is performed and thus an upper layer can use information of a lower layer. The error concealment unit 2454 includes a mode determining unit 2455, an area searching unit 2456, a resolution comparing unit 2457, an up-sampling unit 2458, and a data reconstructing unit 2459.

If an error caused by a loss of a key picture in the upper layer is detected, the mode determination unit 2455 determines whether each macroblock of the-current key picture is the inter mode or the intra mode.

When a corresponding macroblock is determined to be in the inter mode; the area searching unit 2456 selects a picture that is temporally matched with the current key picture from the lower layer and searches in a decoded image of the selected picture of the lower layer for an area corresponding to the macroblock of the current key picture of the upper layer.

After the area corresponding to the macroblock of the current key picture is found in the picture of the lower layer, the resolution comparing unit 2457 compares the spatial resolution of the upper layer with the spatial resolution of the lower layer to determine whether the spatial resolutions are equal to each other.

If the spatial resolutions are equal to each other, the data reconstructing unit 2459 copies data of the decoded image of the area of the lower layer, which is found to correspond to the macroblock of the current key picture of the upper layer, to the macroblock of the current key picture of the upper layer, thereby performing decoding. If the spatial resolutions are not equal to each other, the up-sampling unit 2458 up-samples the area of the lower layer, which is found to correspond to the macroblock of the current key picture of the upper layer, so as to be the same size as the upper layer by using interpolation and copies data of a decoded image of the up-sampled area to the macroblock of the current key picture of the upper layer, thereby performing decoding.

The present invention can also be embodied as a computer-readable code on a computer-readable recording medium. The computer-readable recording medium is any data storage device that can store data, which can be thereafter read by a computer system. Examples of the computer-readable recording medium include read-only memory (ROM), random-access memory (RAM), CD-ROMs, magnetic tapes, floppy disks, optical data storage devices, and carrier waves (transmission over the Internet). The computer-readable recording medium can also be distributed over network coupled computer systems so that the computer-readable code is stored and executed in a distributed fashion. Also, function programs, codes, and code segments for implementing the present invention can be easily construed by those skilled in the art.

The present invention has been particularly shown and described with reference to exemplary embodiments thereof. Terms used herein are only intended to describe the present invention and are not intended to limit the meaning or scope of the present invention as defined in the claims.

Therefore, it will be understood by those of ordinary skill in the art that various changes in form and details may be made therein without departing from the spirit and scope of the present invention as defined by the following claims. Accordingly, the disclosed embodiments should be considered in a descriptive sense only and not in a restrictive sense. The scope of the present invention will be defined by the appended claims, and differences within the scope should be construed to be included in the present invention.

## Claims

1. A scalable video decoding method in which prediction is performed with reference to a key picture for distinguishing groups of pictures (GOPs), the scalable video decoding method comprising:
receiving a bitstream that has been encoded in such a way that a plurality of key pictures are sequentially assigned key picture numbers; and
detecting a loss of a key picture by checking continuity between consecutive key picture numbers assigned to the plurality of key pictures extracted from the received bitstream.

2. A scalable video decoder in which prediction is performed with reference to a key picture for distinguishing groups of pictures (GOPs), the scalable video decoder comprising:
a receiving unit receiving a bitstream that has been encoded in such a way that a plurality of key pictures are sequentially assigned key picture numbers; and
an error detection unit detecting a loss of a key picture by checking continuity between consecutive key picture numbers assigned to the plurality of key pictures extracted from the received bitstream.

3. A computer-readable recording medium having recorded thereon a program for implementing methods claimed in one of claim 1 and 2.
